(19) Europäisches Patentamt / European Patent Office / Office européen des brevets

(11) **EP 4 377 648 B1**

(12) **FASCICULE DE BREVET EUROPEEN**

(45) Date de publication et mention de la délivrance du brevet:
**11.12.2024 Bulletin 2024/50**

(21) Numéro de dépôt: **22817871.1**

(22) Date de dépôt: **04.10.2022**

(51) Classification Internationale des Brevets (IPC):
**G01K 17/00** (2006.01)   **G01K 17/20** (2006.01)

(52) Classification Coopérative des Brevets (CPC):
**G01K 17/00; G01K 17/20**

(86) Numéro de dépôt international:
**PCT/EP2022/077589**

(87) Numéro de publication internationale:
**WO 2023/057453 (13.04.2023 Gazette 2023/15)**

(54) **PROCÉDÉ, DISPOSITIF ET SYSTÈME POUR LA DÉTERMINATION D'UNE QUANTITÉ D'ÉNERGIE THERMIQUE FOURNIE A UN LOCAL D'UN BÂTIMENT SUR UNE PÉRIODE DONNÉE**

VERFAHREN, VORRICHTUNG UND SYSTEM ZUR BESTIMMUNG EINER AN EINEN RAUM IN EINEM GEBÄUDE ÜBER EINEN BESTIMMTEN ZEITRAUM GELIEFERTEN WÄRMEENERGIE

METHOD, DEVICE AND SYSTEM FOR DETERMINING AN AMOUNT OF THERMAL ENERGY SUPPLIED TO A ROOM IN A BUILDING OVER A GIVEN PERIOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.10.2021 FR 2110545**

(43) Date de publication de la demande:
**05.06.2024 Bulletin 2024/23**

(73) Titulaire: **KOCLIKO**
**33000 Bordeaux (FR)**

(72) Inventeurs:
• **VORGER, Eric Emmanuel**
**33000 Bordeaux (FR)**
• **NÉDÉLEC, Renaud Marcel**
**33000 Bordeaux (FR)**
• **ROBILLART, Maxime Serge**
**33000 Bordeaux (FR)**
• **MUNARETTO, Fabio**
**33000 Bordeaux (FR)**

(74) Mandataire: **A.P.I. Conseil**
**Technopôle Hélioparc**
**4, rue Jules Ferry**
**64000 Pau (FR)**

(56) Documents cités:
**FR-A1- 2 672 991    FR-A1- 3 062 723**

• **"Calculer le coefficient de déperdition d'un bâtiment", 9 July 2016 (2016-07-09), XP002808727, Retrieved from the Internet <URL:https://web.archive.org/web/20160709205 530/https:/maison-en-conception.fr/calculer-le-c oefficient-de-deperdition-d-un-batiment/> [retrieved on 20230227]**

EP 4 377 648 B1

## Description

### Domaine technique

L'invention concerne le domaine du bâtiment, notamment de la gestion de l'énergie thermique dans un bâtiment. En particulier, il concerne un procédé de détermination d'une quantité d'énergie thermique fournie à un local d'un bâtiment sur une période donnée. L'invention concerne en outre un dispositif et un système de détermination d'une quantité d'énergie thermique fournie à un local d'un bâtiment, notamment pour de la répartition de frais énergétiques.

### Technique antérieure

Ci-après, nous décrivons l'art antérieur connu à partir duquel l'invention a été développée.

Dans le cadre des objectifs fixés dans l'accord de Paris, l'Union européenne s'est fixé des objectifs ambitieux pour la transition énergétique à l'horizon 2030 et 2050, en se concentrant sur l'augmentation de la pénétration des énergies renouvelables, l'efficacité énergétique et la réduction des émissions de gaz à effet de serre.

En 2016, les bâtiments représentaient près de 40% de la consommation d'énergie finale de l'Union européenne. Ainsi, bien qu'il existe de grandes disparités dans les performances des bâtiments d'un pays à l'autre, ce secteur présente une marge de progression significative en termes d'efficacité énergétique. En particulier, le chauffage et le refroidissement dans le secteur résidentiel, les services et l'industrie représentent environ 50% de l'approvisionnement en énergie primaire de l'UE (Commission européenne - Fiche d'information - 16 février 2016). En particulier, l'origine de l'énergie primaire pour le chauffage résidentiel repose principalement sur des combustibles fossiles (82% en 2016) et 68 % du total des importations de gaz en Europe est imputable au secteur du chauffage et du refroidissement.

Cela fait du chauffage des bâtiments une cible de choix pour le respect des objectifs de transition énergétique à l'horizon 2030 et 2050.

Ainsi, les bâtiments ont fait l'objet de nombreuses études et de modélisation visant à caractériser leur performance énergétique. Il a, par exemple, été proposé des simulations thermiques dynamiques (STD) de bâtiment. Ces études, principalement destinées aux maîtres d'ouvrage, permettent de simuler les performances énergétiques de différentes solutions techniques envisagées, avec par exemple des comparaisons de VMC, de générateurs de chaleur ou encore de solutions de gestion de l'éclairage artificiel. Ces études à base de simulations thermiques dynamiques de bâtiment sont aussi mises en oeuvre dans les programmes de projets de construction pour analyser le confort thermique d'été en l'absence de climatisation ou pour quantifier des besoins en chauffage.

De telles simulations ont également été proposées pour estimer des consommations prévisionnelles. Cependant les bâtiments sont des systèmes énergétiques complexes et non stationnaires. Ainsi, des écarts importants sont constatés entre les consommations prévues en simulation et mesurées à cause d'erreurs sur les données d'entrée, les scénarios d'occupation ou les conditions environnementales. En outre, ces simulations sont généralement basées sur des clients logiciels lourds, et ne sont pas utilisées dans des systèmes embarqués configurés pour faire de l'analyse en temps réel. Il a récemment été proposé de modéliser un bâtiment et ses systèmes pour optimiser sa gestion énergétique (Hugo Viot. Modélisation et instrumentation d'un bâtiment et de ses systèmes pour optimiser sa gestion énergétique. Université de Bordeaux, 2016. Français. NNT :2016BORD0349 ; tel-01503037). En particulier, étant donné que les modèles de STD sont réputés trop lourds, il a été proposé la construction de modèles de faibles dimensions afin de pouvoir les embarquer dans un contrôleur pour améliorer la gestion énergétique. Néanmoins de tels modèles simplifiés présentent des performances pouvant être améliorées. En outre, leur performance dépendra largement de la base d'apprentissage utilisée et un modèle pourrait être à entrainer pour chaque nouveau bâtiment étant donné qu'un bâtiment donné ne se comportera pas de la même façon qu'un autre.

Ainsi, à défaut de pouvoir prédire efficacement ces consommations, il a été mis en place des suivis et, en particulier dans le cadre de la RT2012, un comptage a minima mensuel des consommations d'énergie est imposé par poste et par type d'énergie. Toutefois, cela ne constitue qu'un suivi et non une mesure pour favoriser la transition énergétique.

Sur cet aspect, dans un immeuble chauffé collectivement, le partage des frais de chauffage se fait habituellement selon les tantièmes ou au prorata de la surface de l'appartement. Un tel partage n'incite pas à la frugalité, car même si la consommation de chauffage diffère d'un logement à l'autre, les frais de chauffage resteront calculés en fonction de la surface ou des tantièmes de l'appartement.

Ainsi, au-delà de l'évaluation de l'amélioration de la performance énergétique des bâtiments, de façon à responsabiliser les occupants, il a été mis en place en France une individualisation des frais de chauffage. L'individualisation (ou répartition) des frais de chauffage permet de payer selon ce que chaque appartement a réellement consommé. Les occupants sont ainsi encouragés à maîtriser leur consommation et à éviter les gaspillages d'énergie. L'individualisation des frais de chauffage permet de réaliser une économie d'énergie de l'ordre de 15 % en moyenne et des baisses de factures pour les habitants souhaitant adapter leur consommation (ADEME. Septembre 2019. ISBN 979-10-297-1399-6).

De façon à pouvoir comptabiliser ce que chaque occupant consomme, il est nécessaire d'installer des appareils de mesure lisibles à distance. Deux appareils principaux se partagent aujourd'hui le marché : les compteurs individuels d'énergie thermique (CET) d'une part et les répartiteurs de frais de chauffage (RFC) d'autre part.

Les CET sont placés à l'entrée de chaque logement et affichent la consommation réelle de chauffage, permettant aux occupants de suivre leurs consommations. Les RFC sont mis en place lorsqu'il est techniquement impossible ou non rentable d'installer des CET. Les RFC utilisent la mesure de la température de surface des émetteurs de chaleur. Ils sont placés sur chaque radiateur du logement. Il existe trois grands modes de fonctionnement pour les RFC « classiques ». Ils sont définis par la norme NF EN 834 : i) la méthode de mesure par sonde unique (sonde mesurant la température de la surface du corps de chauffe ou du fluide caloporteur) ; ii) la méthode de mesure à l'aide de deux sondes (une sonde mesurant la température de la surface du corps de chauffe ou du fluide caloporteur, une autre sonde mesurant la température ambiante) ; et iii) la méthode de mesure par sondes multiples (plusieurs sondes pour mesurer la température moyenne du fluide caloporteur, et une sonde pour la température ambiante).

Les objectifs d'installation de ces solutions sont largement en deçà des attentes. En effet, principalement due à la complexité d'installation de ces systèmes, de nombreux bâtiments ne présentent pas encore d'individualisation des frais de chauffage.

De plus, ces systèmes de répartition des frais de chauffage ne sont pas en mesure de proposer un calcul fiable des énergies consommées par rapport au positionnement des logements. En effet, il a été proposé de calculer des frais de chauffage sur la base d'une part fixe de 30 % couplée à la possibilité d'intégrer des coefficients de correction pour prendre en compte des situations thermiquement défavorables (logements situés au nord bénéficiant de moins d'apports solaires, logements au dernier étage souffrant de déperditions thermiques plus importantes...). Néanmoins ces artifices ne permettent pas de rendre compte avec justesse de la consommation d'un logement. Ainsi, il reste une iniquité forte pour les occupants en fonction de la position des logements.

En outre, ces systèmes restent sensibles aux « vols de chaleurs ». En effet, un logement positionné au centre d'un bâtiment ayant un chauffage réduit profitera de la chaleur transférée depuis les logements chauds adjacents. Ainsi, il reste également une iniquité associée à l'utilisation des compteurs individuels d'énergie thermique et des répartiteurs de frais de chauffage actuels.

Des exemples de compteurs de chaleur pour des bâtiments sont décrits dans les documents FR 2 672 991 A1 et FR 3 062 723 A1.

Il existe donc un besoin pour une solution permettant de déterminer efficacement (p. ex. en temps réel et avec justesse) la consommation d'énergie thermique d'un logement et en particulier, la quantité d'énergie thermique fournie par un dispositif collectif de gestion thermique à un local d'un bâtiment. En outre, une telle solution devrait également permettre de calculer de façon plus juste des frais de chauffage et ainsi de renforcer l'équité dans la prise en charge des frais de chauffage dans un bâtiment collectif.

L'invention a pour but de remédier aux inconvénients de l'art antérieur. En particulier, l'invention a pour but de proposer un procédé de détermination d'une quantité d'énergie thermique fournie à un local d'un bâtiment sur une période donnée, ledit procédé étant apte à déterminer avec précision et justesse une telle quantité et cela sans nécessiter l'installation coûteuse d'équipements dédiés. En outre, la prise en compte d'un modèle de simulation thermique du bâtiment et le fait de pouvoir prendre en considération une température ambiante pour réaliser la répartition, permet de mettre en place des systèmes de compensation permettant d'améliorer l'équité entre les utilisateurs et de finalement prendre en compte un niveau de confort thermique plutôt qu'un niveau de consommation énergétique.

L'invention a en outre pour but de proposer un répartiteur pour la détermination d'une quantité d'énergie thermique fournie par un dispositif collectif de gestion thermique à un local d'un bâtiment, ledit répartiteur pouvant fonctionner à partir de simples mesures de températures ambiantes et extérieures du bâtiment pour déterminer une quantité d'énergie thermique fournie par un dispositif collectif de gestion thermique à un local d'un bâtiment.

## Résumé de l'invention

L'invention vise à pallier ces inconvénients.

L'invention vise en particulier un procédé de répartition de frais énergétiques dans un bâtiment collectif comportant plusieurs locaux individuels et au moins un dispositif collectif de gestion thermique, le procédé étant applicable à tous les locaux individuels du bâtiment collectif et comprenant la détermination d'une quantité d'énergie thermique fournie par le au moins un dispositif collectif de gestion thermique, à au moins un local individuel du bâtiment collectif, sur une période donnée, ladite détermination, réalisée par un ou plusieurs processeurs, comportant l'utilisation,

- d'un modèle de simulation thermique du bâtiment collectif qui représente virtuellement le bâtiment collectif et qui prend en compte, pour chaque local individuel, une géométrie du local individuel et une composition des parois du local individuel, ainsi que les échanges thermiques entre différents locaux du bâtiment collectif,
- d'une pluralité de valeurs de températures ambiantes du bâtiment collectif, la pluralité de valeurs de températures ambiantes du bâtiment collectif comportant plusieurs températures du local individuel et plusieurs températures de locaux ou espaces communs du bâtiment collectif qui sont adjacents au local individuel,

- d'une ou plusieurs valeurs de températures extérieures au bâtiment collectif,
- d'un volume du local individuel, et
- d'au moins un coefficient de déperdition thermique du local individuel, et

le calcul de l'au moins un coefficient de déperdition thermique du local individuel à partir du modèle de simulation thermique du bâtiment collectif.

La demanderesse a développé un procédé capable de calculer rapidement une quantité d'énergie fournie à un local individuel à partir essentiellement de données de température ambiante intérieure et extérieure. En particulier, il peut y avoir, dans le cadre de la présente invention, une utilisation d'autant de coefficients de déperdition thermique qu'il y a de locaux et dans certains modes de réalisations avantageux, plusieurs coefficients de déperdition thermique pourront être associés à un même local individuel en fonction de la période considérée. Le procédé peut notamment être utilisé pour calculer des frais de chauffage et intégrer une notion d'équité entre les utilisateurs d'un même bâtiment collectif.

Selon d'autres caractéristiques optionnelles du procédé, ce dernier peut inclure facultativement une ou plusieurs des caractéristiques suivantes, seules ou en combinaison :

- lorsque le local individuel est en outre défini par une composition des menuiseries, le modèle de simulation thermique du bâtiment collectif est un modèle prenant en compte en outre la composition des menuiseries. Ainsi, il est possible en intégrant directement la composition des menuiseries lors de la construction du modèle de simulation thermique du bâtiment collectif d'en améliorer sa performance sans alourdir le calcul.
- le modèle de simulation thermique du bâtiment collectif est un modèle prenant en compte en outre des données représentatives de rayonnement solaire local sur la période donnée. Ainsi, il est possible en intégrant directement des données représentatives de rayonnement solaire lors de la construction du modèle de simulation thermique du bâtiment collectif d'en améliorer sa performance sans alourdir le calcul.
- le modèle de simulation thermique du bâtiment collectif est un modèle de simulation thermique dynamique du bâtiment collectif. L'utilisation d'un modèle de simulation thermique dynamique permet d'obtenir avec le procédé selon l'invention des quantités de chaleur fournies déterminées présentant une justesse améliorée.
- le coefficient de déperdition thermique du local individuel est sélectionné parmi au moins deux coefficients de déperdition thermique prédéterminés, lesdits coefficients de déperdition thermique prédéterminés correspondant chacun à une période temporelle. Ainsi, il est possible de choisir, par exemple en fonction de la saison ou du mois de l'année, le coefficient de déperdition thermique qui permettra de déterminer une quantité d'énergie thermique fournie avec une plus grande justesse.
- la détermination de la quantité d'énergie thermique fournie par le au moins un dispositif collectif de gestion thermique, à l'au moins un local individuel du bâtiment collectif, comporte l'utilisation d'un ou plusieurs coefficients d'ajustement, chaque coefficient d'ajustement étant appliqué à une variable d'ajustement mesurée ou calculée pour la période donnée ; de préférence le coefficient d'ajustement a été calculé à partir d'un modèle de simulation thermique dynamique du bâtiment collectif. Ainsi, il est possible d'ajuster la quantité d'énergie fournie déterminée en fonction de paramètres supplémentaires décrivant au mieux l'utilisation du local individuel. Cela permettra de déterminer une quantité d'énergie thermique fournie avec une plus grande justesse.
- la variable d'ajustement est sélectionnée parmi : une variable représentative des déperditions de chaleur liées aux ouvertures de fenêtres, une variable représentative du taux d'occupation du local individuel, une variable représentative des conditions météorologiques, par exemple des conditions météorologiques exceptionnelles, et/ou une variable représentative de l'utilisation d'un chauffage d'appoint. Cela permet d'intégrer les usages réels qui sont mesurés directement ou modélisés pour chaque local individuel sans alourdir le modèle et induit une justesse plus élevée.
- la variable d'ajustement est mesurée directement au niveau du local individuel, modélisée de manière probabiliste à partir de statistiques, ou reconstituée à partir de mesures d'algorithmes d'apprentissage automatiques.
- pour chaque coefficient d'ajustement, le procédé a comporté une étape de calcul de plusieurs valeurs de coefficients d'ajustement, chacune fonction d'une période dans l'année, et la valeur du coefficient d'ajustement utilisée pour déterminer la quantité d'énergie thermique fournie est fonction de la période donnée. Il y a par exemple une valeur de coefficient d'ajustement calculée pour chaque mois et en fonction du moment c'est la valeur correspondante au mois considéré qui est utilisée.
- il comporte une étape de calibrage du modèle de simulation thermique du bâtiment collectif, ladite étape de calibrage est de préférence réalisée à partir d'une première période de mesure et d'un algorithme de calibrage bayésien de sorte que les prédictions de consommations et de températures intérieures au pas de temps horaire du modèle de simulation thermique du bâtiment collectif reproduisent au plus proche les mesures.

- Il comporte une étape de calibrage du modèle de simulation thermique du bâtiment collectif, ladite étape de calibrage est de préférence réalisée à partir d'une première période de mesure de valeurs de températures ambiantes et extérieures et d'un algorithme de calibrage bayésien de sorte que des températures calculées par le modèle de simulation thermique du bâtiment collectif reproduisent au plus proche les valeurs de températures mesurées.
- la température ambiante du local individuel correspond à des températures mesurées dans plusieurs emplacements du local. Les différents emplacements peuvent correspondre à différentes pièces.
- il comporte une étape de calcul de frais de chauffage individualisé, pour un local individuel, en fonction d'une quantité déterminée d'énergie thermique fournie, par le dispositif collectif de gestion thermique, audit local individuel.
- l'étape de calcul de frais de chauffage individualisé prend en compte des caractéristiques d'orientation et de positionnement du local individuel dans le bâtiment collectif. Cela permet de corriger les disparités entre les locaux ou espaces communs du bâtiment collectif. Cela induit un principe d'équité de la répartition des frais de chauffage et permet de corriger les disparités entre les locaux ou espaces communs du bâtiment collectif (par exemple orientation différente, étage différent, etc.). En outre, cela permet de faire payer aux locataires la partie de la consommation de chauffage sur laquelle ils sont vraiment responsables, à savoir la température à laquelle ils se chauffent.
- il comporte une étape de calcul d'un intervalle de confiance sur la quantité d'énergie thermique déterminée, de préférence ledit calcul d'un intervalle de confiance comportant l'utilisation d'au moins une valeur d'incertitude sur la ou les variables d'ajustement utilisées lors de la détermination de la quantité d'énergie thermique fournie.
- le calcul d'au moins un coefficient de déperdition thermique du local individuel à partir d'un modèle de simulation thermique du bâtiment collectif peut comporter, pour un local individuel, le calcul d'au moins un coefficient de déperdition thermique à partir d'une pluralité de simulations dans lesquelles les valeurs de géométrie du local individuel et de composition des parois et éventuellement la composition des menuiseries ont été modifiées de façon à intégrer des incertitudes associées au bâtiment collectif.
- le calcul d'au moins un coefficient de déperdition thermique du local individuel à partir d'un modèle de simulation thermique du bâtiment collectif peut comporter, pour un local individuel, le calcul d'au moins un coefficient de déperdition thermique à partir d'une pluralité de simulations dans lesquelles en outre, des valeurs d'usage et/ou de conditions météorologiques ont été modifiées de façon à intégrer des incertitudes associées aux usages et aux conditions météorologiques.

Selon un deuxième objet, l'invention porte sur un répartiteur de frais énergétiques dans un bâtiment collectif comportant plusieurs locaux individuels et au moins un dispositif collectif de gestion thermique, le procédé étant applicable à tous les locaux individuels du bâtiment collectif et comprenant la détermination d'une quantité d'énergie thermique fournie par le au moins un dispositif collectif de gestion thermique, à au moins un local individuel du bâtiment collectif, ledit répartiteur comprenant un ou plusieurs processeurs configurés pour déterminer la quantité d'énergie thermique fournie en utilisant,

- un modèle de simulation thermique du bâtiment collectif qui représente virtuellement le bâtiment collectif et qui prend en compte, pour chaque local individuel, une géométrie du local individuel et une composition des parois du local individuel, ainsi que les échanges thermiques entre différents locaux du bâtiment collectif,
- une pluralité de valeurs températures ambiantes du bâtiment collectif, la pluralité de valeurs de températures ambiantes du bâtiment collectif comportant plusieurs températures du local individuel et plusieurs températures de locaux ou espaces communs du bâtiment collectif qui sont adjacents au local individuel,
- une ou plusieurs valeurs de températures extérieures au bâtiment collectif,
- un volume du local individuel, et
- au moins un coefficient de déperdition thermique du local individuel qui décrit la proportion de l'énergie thermique fournie au local individuel qui est transférée aux locaux ou espaces communs adjacents du local individuel,

ledit répartiteur étant caractérisé en ce que ledit répartiteur est configuré pour calculer l'au moins un coefficient de déperdition thermique du local individuel à partir du modèle de simulation thermique du bâtiment collectif.

Dans une mise en oeuvre particulière, lorsque le local individuel est en outre défini par une composition des menuiseries, le répartiteur est caractérisé en ce que le modèle de simulation thermique du bâtiment collectif prend en compte en outre la composition des menuiseries.

De façon préférée, le répartiteur est tel que le modèle de simulation thermique du bâtiment collectif est un modèle prenant en compte en outre des données représentatives de rayonnement solaire local sur la période donnée.

Comme cela sera décrit par la suite, le répartiteur dispose d'une pluralité de coefficients de déperdition thermique chacun dédié à un local individuel. En outre, un local pourra être associé à plusieurs coefficients de déperdition thermique chacun dédié à une période donnée.

Selon un troisième objet, l'invention porte sur un système de répartition de frais de chauffage comportant un répartiteur selon l'invention. Un tel système de répartition permet notamment de faire payer aux locataires la partie de la consommation de chauffage sur laquelle ils sont vraiment responsables, à savoir la température à laquelle ils se chauffent.

**Brève description des dessins**

D'autres caractéristiques et avantages de l'invention seront mieux compris à la lecture de la description qui va suivre et en référence aux dessins annexés, donnés à titre illustratif et nullement limitatif.

[Fig. 1] La figure 1 représente un procédé selon un mode de réalisation de l'invention.
[Fig. 2] La figure 2 représente un système de détermination d'une quantité d'énergie thermique fournie par un dispositif collectif de gestion thermique selon un mode de réalisation de l'invention.

Les figures ne respectent pas nécessairement les échelles, notamment en épaisseur, et ce à des fins d'illustration.

Des aspects de la présente invention sont décrits en référence à des organigrammes et/ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. À cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et/ou de l'organigramme, et des combinaisons de blocs dans les schémas de principe et/ou l'organigramme, peuvent être mis en oeuvre par des systèmes matériels spéciaux qui exécutent les fonctions ou actes spécifiés ou effectuer des combinaisons de matériel spécial et d'instructions informatiques.

**Description des modes de réalisation**

Ci-après, nous décrivons un résumé de l'invention et le vocabulaire associé, avant de présenter les inconvénients de l'art antérieur, puis enfin de montrer plus en détail comment l'invention y remédie.

L'expression « coefficient de déperdition thermique » aussi appelée le coefficient global de déperdition volumique du bâtiment correspond à une performance globale de l'isolation en déperditions thermiques par degré d'écart entre les ambiances intérieures et extérieures. Le coefficient global de déperdition volumique du bâtiment exprime les déperditions par unité de volume chauffé. Il est généralement exprimé en Watt par mètre cube pour une variation de 1 degré Celsius entre la température extérieure et intérieure (Watt/$m^3$ et °C). Le coefficient G a été introduit lors de la réglementation thermique de 1974 : « Arrêté du 10 avril 1974 relatif à l'isolation thermique et au réglage automatique des installations de chauffage dans les bâtiments d'habitation », généralement il peut varier de 0,5 à 3 Watt/$m^3$ et °C.

Dans la suite de la description, l'expression « local d'un bâtiment » correspond à une partie d'un bâtiment pouvant être constituée d'une ou de plusieurs pièces. Le local pourra par exemple correspondre à des bureaux ou une habitation. Ainsi, l'expression « volume du local » correspond au volume d'une ou de plusieurs pièces d'un bâtiment.

L'expression « frais de chauffage individualisé » correspond à des frais de chauffage calculés, généralement pour un local d'un bâtiment, à partir des consommations réelles du local, ces consommations étant établies à partir d'appareils qui déterminent la quantité de chaleur ou de froid consommée au sein de chaque local.

L'expression « modèle de simulation thermique » peut correspondre dans le cadre de l'invention à un modèle configuré pour représenter virtuellement le bâtiment et décrire son comportement face à des sollicitations liées au climat ou au comportement des usagers (ces sollicitations pouvant être modélisées de manière stochastique). En particulier, l'expression « simulation thermique dynamique du bâtiment » peut correspondre dans le cadre de l'invention à un modèle configuré pour calculer l'évolution temporelle de l'état thermique d'un bâtiment. Il permet en particulier de déterminer à tous les instants choisis d'une simulation, la température en un certain nombre de points des éléments le composant et qui évoluent selon les différentes lois régissant les échanges thermiques (convection, conduction, rayonnement, changement d'état). Ainsi, un modèle de simulation thermique permet d'estimer les besoins thermiques d'un bâtiment en tenant compte de l'enveloppe du bâtiment et de son inertie, des divers apports thermiques, du comportement des occupants et du climat local.

L'expression « rayonnement solaire local » peut correspondre dans le cadre de la présente invention à la quantité d'énergie solaire reçue par unité de surface. Il peut par exemple être exprimé en Watt par mètre carré (Watt/$m^2$).

Par « modèle de corrélation » ou « algorithme », il faut comprendre au sens de l'invention une suite finie d'opérations ou d'instructions permettant de calculer une valeur à partir d'une ou plusieurs valeurs d'entrée. La mise en oeuvre de cette suite finie d'opérations permet par exemple d'attribuer une valeur Y, telle qu'une étiquette Y, à une observation décrite par un ensemble de caractéristiques ou paramètres X grâce par exemple à la mise en oeuvre d'une fonction f, susceptible de reproduire Y en ayant observé X.

$$Y = f(X) + e$$

avec :

e : le bruit ou l'erreur de mesure.

Par « modèle d'apprentissage automatique supervisé », on entend au sens de l'invention un modèle de corrélation généré automatiquement à partir de données, appelées observations qui ont été étiquetées.

Par « modèle d'apprentissage automatique non supervisée », on entend au sens de l'invention un modèle de corrélation généré automatiquement à partir de données, appelées observations qui n'ont pas été étiquetées.

On entend par « traiter », « calculer », « déterminer », « afficher », « transformer », « extraire », « comparer» ou plus largement « opération exécutable », au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipulent et transforment les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (p. ex. après une opération de conversion vers un autre code). Les exemples de code de programme peuvent inclure, sans s'y limiter, un sous-programme, une fonction, une application exécutable, un code source, un code objet, une bibliothèque et/ou toute autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « dispositif électronique », tout dispositif comprenant une unité de traitement ou un processeur, par exemple sous la forme d'un microcontrôleur coopérant avec une mémoire de données, éventuellement une mémoire programme, lesdites mémoires pouvant être dissociées. L'unité de traitement coopère avec lesdites mémoires au moyen d'un bus de communication interne.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

On entend par « précis » ou « précision », « fiable » ou « fiabilité », «juste » ou «justesse » des mesures répétables et exactes. En outre, cela signifie que les mesures sont exemptes d'erreur ou à tout le moins qu'elles présentent un taux d'erreur inférieur à par exemple 5%, de préférence 2% et de façon plus préférée inférieur à 1%. Par ailleurs l'expression «justesse améliorée » peut correspondre au sens de l'invention à une consommation très exacte ; dont la valeur présente une précision avec un taux d'erreur inférieur à par exemple 5%, de préférence 2% et de façon plus préférée inférieur à 1%.

Il existe des compteurs individuels d'énergie thermique (CET), mais ces systèmes sont coûteux et complexes à installer (il faut un compteur par boucle d'eau chaude et leur installation requiert un travail de plomberie). Il existe également des répartiteurs de frais de chauffage (RFC) basés sur la mesure de la température de surface des radiateurs. Néanmoins ces systèmes ne sont pas précis et sont complexes à installer (ils doivent notamment être installés sur chacun des radiateurs). Ni les CET, ni les RFC ne permettent de mettre en place une équité pour les occupants d'un bâtiment.

Les inventeurs ont développé une solution permettant, sans installation de dispositifs électroniques lourds, de déterminer une quantité d'énergie thermique fournie à un local d'un bâtiment sur une période donnée.

En particulier, ils ont développé une solution de détermination prenant en compte un coefficient de déperdition thermique du local ayant été calculé à partir d'un modèle de simulation thermique du bâtiment prenant en compte la géométrie du local et la composition des parois. Par ailleurs, si le local comprend des menuiseries, le modèle de simulation thermique du bâtiment prend également en compte la composition de ces menuiseries. En outre, de façon préférée, il peut également prendre en compte des données représentatives de rayonnement solaire local sur une période donnée.

Une telle solution permet d'allier précision d'une solution faisant appel à de la simulation thermique mettant en oeuvre des systèmes de calcul lourds avec la réactivité et la légèreté d'une solution basée sur un coefficient de déperdition thermique. En effet, il a été tenté d'intégrer des modèles de simulation thermique directement dans des procédés de détermination d'une quantité d'énergie thermique fournie à un local, mais ces solutions n'étaient pas suffisamment précises et généralement trop lourdes à implémenter.

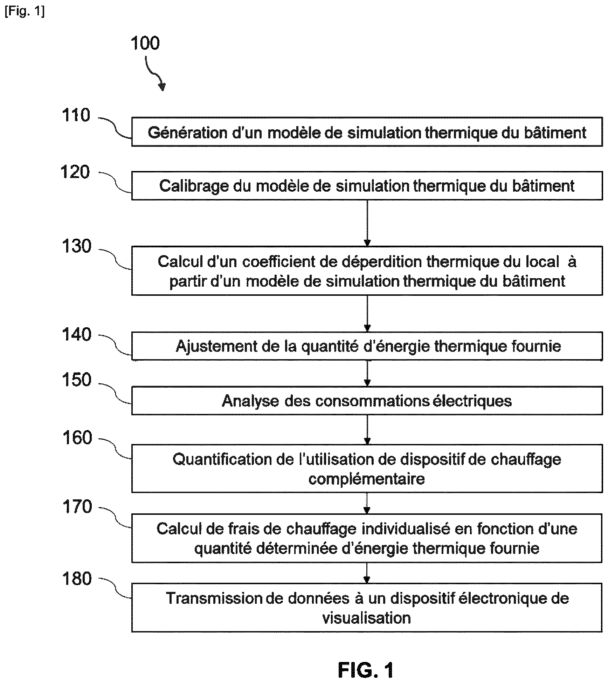

Ainsi, selon un premier aspect, l'invention concerne un procédé 100 de détermination d'une quantité d'énergie thermique fournie à un local 20 d'un bâtiment 2 tel qu'illustré selon un exemple à la figure 1.

La quantité d'énergie thermique fournie au local 20 correspond par exemple à la quantité d'énergie fournie par un dispositif collectif 30 de gestion thermique. Le dispositif collectif 30 de gestion thermique correspond généralement à une chaudière à gaz collective. Néanmoins, il peut également correspondre à un autre système de chauffage, possiblement électrique, de type pompe à chaleur, ou encore d'un réseau de chaleur.

En particulier, la quantité d'énergie thermique fournie déterminée peut être relative. Néanmoins, de façon préférée, la quantité d'énergie thermique fournie déterminée sera exprimée dans une unité internationale de mesure de l'énergie thermique telle que des watts heures. La quantité d'énergie thermique fournie peut par exemple correspondre à une quantité mensuelle.

De façon préférée, le local 20 pour lequel il sera déterminé une quantité d'énergie thermique fournie correspond à un local individuel, et de façon encore plus préférée un logement. Le local pourra être défini notamment par une géométrie. La géométrie du local pourra correspondre aux dimensions des parois formant ledit local. Ces dimensions pourront se référer également aux dimensions des menuiseries et pourront intégrer l'orientation des parois formant le local. De façon préférée, la géométrie du local 20 comportera la surface des parois et éventuellement la surface des menuiseries, leurs positions dans le bâtiment 2 et leurs orientations. En outre, le local pourra être défini notamment par la composition des parois et éventuellement par la composition des menuiseries. En effet, en fonction des dimensions et des caractéristiques des matériaux utilisés, le comportement du local et donc la quantité d'énergie thermique à fournir pourront varier.

Le procédé 100 de détermination selon l'invention permet avantageusement de calculer une quantité d'énergie thermique fournie sur une période donnée.

La période donnée correspondra par exemple à une semaine, un mois, un trimestre, un semestre ou encore une année. Comme cela sera détaillé par la suite, la présente invention permet de prendre en compte les fluctuations associées aux conditions climatiques (p. ex. rayonnement solaire) et la période donnée pourra de préférence correspondre à une période de temps sur laquelle un seul et même coefficient de déperdition thermique est utilisé. Avantageusement, la période donnée est une période calendaire et elle est de préférence associée aux saisons.

Dans le cadre de la présente invention, la détermination d'une quantité d'énergie thermique fournie à un local 20 d'un bâtiment 2 comporte l'utilisation : d'une pluralité de valeurs de températures ambiantes du bâtiment, d'une valeur de température extérieure au bâtiment 2, d'un volume du local 20 du bâtiment et d'un coefficient de déperdition thermique du local.

Les valeurs de températures ambiantes du bâtiment pourront être fournies par des capteurs de température dédiés au procédé de détermination ou des capteurs de température intégrés à des systèmes déjà installés dans le bâtiment. Les capteurs de température ambiante seront de préférence des capteurs de température connectés à un réseau de communication (e.g., internet, wifi®, sigfox®, LoRa®, LoRaWAN®, Zigbee®, Z-Wave®, Enocean®, 3G/4G/5G). Les valeurs de température ambiante du bâtiment pourront comporter de préférence plusieurs températures d'un local à étudier et des températures de locaux adjacents au local à étudier (c.-à-d. pour lequel une quantité d'énergie thermique fournie doit être déterminée) ou encore d'espaces communs adjacents au local à étudier.

Une température ambiante du local 20 pourra correspondre à des températures mesurées au moins toutes les heures dans plusieurs emplacements (c.-à-d. pièces) du local 20. Les valeurs utilisées de température ambiante du local 20 pourront aussi correspondre à des moyennes ou des médianes.

En particulier, la détermination peut comporter l'utilisation d'au moins deux emplacements de mesure de la température ambiante du local 20 (de préférence une zone de jour et une zone de nuit).

Le procédé de détermination pourra utiliser une ou plusieurs valeurs de températures extérieures au bâtiment 2. La ou les valeurs de températures extérieures du bâtiment pourront être fournies par des capteurs de température dédiés au procédé de détermination ou des capteurs de température intégrés à des systèmes déjà installés autour ou sur le bâtiment. Les capteurs de température extérieure seront de préférence des capteurs de température connectés à un réseau de communication (e.g., internet, wifi®, sigfox®, LoRa®, LoRaWAN®, Zigbee®, Z-Wave®, Enocean®, 3G/4G/5G). Alternativement, les valeurs de températures extérieures du bâtiment pourront correspondre à des valeurs de températures extérieures locales mesurées ou calculées pour une zone géographique dans laquelle se trouve le bâtiment 2. Les valeurs de températures extérieures du bâtiment pourront également correspondre à des valeurs de températures extérieures locales estimées pour une zone géographique dans laquelle se trouve le bâtiment 2.

Le volume du local 20 du bâtiment correspondra généralement à une valeur connue ou calculée considérant la géométrie du bâtiment et du local en particulier. Dans certains modes de réalisation, le volume du local pourra correspondre à plusieurs volumes associés chacun à un ou plusieurs espaces du local. Par exemple, la détermination de la quantité d'énergie thermique fournie à un local 20 pourra prendre en considération un volume particulier pour chaque valeur de température ambiante du local utilisé. Une zone plutôt chaude associée à des valeurs de températures pourra être associée à un sous volume du local 20 tandis qu'une zone plutôt fraîche sera associée à d'autres valeurs de températures et à un autre sous volume du local 20.

Dans le cadre de la présente invention, la détermination de la quantité d'énergie thermique fournie à un local sera basée sur un coefficient de déperdition thermique du local calculé à partir d'un modèle de simulation thermique 41 du bâtiment 2.

Le calcul du coefficient de déperdition thermique du local à partir d'un modèle de simulation thermique 41 du bâtiment 2 permet d'obtenir un coefficient de déperdition thermique du local beaucoup plus précis, juste, que des coefficients de déperdition thermique calculés ou estimés par d'autres biais.

De façon préférée, le modèle de simulation thermique 41 du bâtiment utilisé pour calculer le coefficient de déperdition thermique du local est un modèle de simulation thermique dynamique du bâtiment. En effet, un modèle de simulation thermique dynamique se basera sur une description précise de la géométrie et de la composition des parois. Par ailleurs, si le local comprend des menuiseries, le modèle de simulation thermique du bâtiment prend également en compte la composition de ces menuiseries. Cela va permettre une prise en compte des phénomènes physiques en jeu (échanges thermiques par convection, conduction, rayonnement) et ainsi un calcul précis de la quantité d'énergie thermique fournie au local.

Il existe d'autres méthodes telles que la méthode 3CL de calcul des consommations conventionnelles des logements utilisées pour la réalisation des DPE. Toutefois, ces méthodes se basent sur une description plus grossière des surfaces déperditives et une modélisation plus grossière des échanges thermiques. Par exemple, la méthode 3CL n'intègre pas une prise en compte d'aspects dynamiques contrairement à la présente invention basée de préférence sur un modèle de simulation thermique dynamique du bâtiment. Elle ne permet que de calculer une consommation annuelle de chauffage/refroidissement/ECS, mais pas, par exemple, d'évolution de température dans le temps. De plus, il s'agit uniquement d'une analyse du bâti sans prendre en compte les usages. De facto elle sera moins précise que la méthode selon la présente invention, qui de préférence permet de réaliser des calculs au pas de temps horaire, aussi bien sur les consommations que les températures intérieures tout en pouvant prendre en compte les usages.

Ainsi, le modèle de simulation thermique du bâtiment prend avantageusement en compte la géométrie du local, la composition des parois, éventuellement la composition des menuiseries et les sollicitations auxquelles le bâtiment est soumis telle que de préférence le climat et les usages.

Dans le cadre de l'invention, un modèle de simulation thermique dynamique (STD) permettra de calculer l'évolution temporelle de l'état thermique d'un bâtiment en utilisant un modèle numérique approché de celui-ci. Ce modèle permet alors d'obtenir à tous les instants choisis de la simulation, la température en un certain nombre de points du bâtiment et qui évoluent selon les différentes lois régissant les échanges thermiques (convection, conduction, rayonnement, changement d'état).

Ainsi, un modèle de simulation thermique dynamique dans le cadre de l'invention permet d'estimer les besoins thermiques (besoins de chauffage et de refroidissement) et les températures dans chaque zone du bâtiment en exploitation. Ce modèle tient compte de l'enveloppe du bâtiment et de son inertie (à partir d'une description des parois internes et externes du bâtiment), des flux d'échanges entre zones thermiques, des divers apports thermiques, du comportement des occupants et du climat local. En outre, avantageusement, lorsque le modèle est utilisé pour estimer les consommations réelles d'énergie, le calcul peut également tenir compte des systèmes énergétiques (système de production, types d'émetteurs, etc.).

De façon préférée, le modèle de simulation thermique est un modèle multizone, de façon plus préférée aux volumes finis et de façon encore plus préférée réduit par analyse modale. Une telle configuration permet de réduire d'un facteur trois le temps de calcul. En outre, à chaque pas de temps, le modèle est configuré pour déterminer les besoins de chauffage, de refroidissement et/ou les températures dans chaque zone du bâtiment. Avantageusement, le modèle est configuré pour intégrer les échanges entre zones, par exemple entre local 20. En outre, le modèle est avantageusement configuré pour prendre en compte l'inertie thermique au niveau de chaque paroi.

En outre, pour améliorer encore la précision et la justesse de la détermination selon l'invention, le modèle de simulation thermique 41 du bâtiment 2 utilisé peut prendre avantageusement en compte en outre des données représentatives de rayonnement solaire local.

La prise en compte des données de rayonnement solaire local notamment par période de temps (p. ex. période donnée) permet de prendre en compte l'apport énergétique du rayonnement solaire, quelle que soit la forme qu'il puisse prendre, directe ou indirecte.

En particulier, les données de rayonnement solaire local comportent le rayonnement global horizontal et le rayonnement diffus horizontal. Ces valeurs, pour un même bâtiment 2 pourront varier fortement en fonction de la période considérée. En outre, pour une même période, l'influence d'un rayonnement solaire sur deux locaux aux situations géographiques différentes (p. ex. emplacement et/ou orientation) pourra être significativement différente. Ainsi, il est très avantageux d'utiliser dans le cadre de l'invention un modèle de simulation thermique 41 du bâtiment 2 prenant en compte des données de rayonnement solaire local pour la période étudiée (i.e.: période de temps) ou des données représentatives de rayonnement solaire local pour la période étudiée.

Les données de rayonnement solaire local ou les données représentatives de rayonnement solaire local pourront avoir été construites à partir de données historiques locales et de préférence elles sont modélisées à partir de données historiques locales. En effet, les mesures de certaines valeurs de rayonnement sont particulièrement couteuses à obtenir si elles doivent être obtenues pour chacun des bâtiments étudiés.

Alternativement, les données représentatives de rayonnement solaire local ont été obtenues à partir d'au moins un dispositif instrumental ou d'un serveur informatique comportant des données relatives au rayonnement solaire local.

Nous allons maintenant décrire plus en détail différents modes de réalisation d'un procédé de détermination d'une quantité d'énergie thermique fournie à un local 20 d'un bâtiment 2 sur une période donnée selon l'invention.

Comme cela est illustré à la figure 1, un procédé de détermination selon l'invention peut comporter une étape de génération 110 d'un modèle de simulation thermique du bâtiment.

Il existe de nombreux outils pour la génération 110 d'un modèle de simulation thermique du bâtiment. De façon préférée, le modèle de simulation thermique du bâtiment 2 est construit à partir d'une solution informatique associant une ou plusieurs bibliothèques dédiées aux éléments nécessaires à la description d'un bâtiment et un module de modélisation permettant de décrire graphiquement le bâtiment 2 étudié en 3D. Ainsi, il est possible de créer des maquettes numériques du bâtiment 2 comportant toutes les informations sur les matériaux, les menuiseries, les équipements et les performances énergétiques.

Au-delà de ces aspects, la génération et l'utilisation d'un modèle de simulation thermique dynamique du bâtiment permettra d'atteindre des résultats bien meilleurs. En effet, il est possible d'utiliser des solutions de modélisation capables d'intégrer en outre les impacts environnementaux et notamment les facteurs associés aux rayonnements lumineux.

De façon préférée, le modèle de simulation thermique 41 du bâtiment 2 utilisé dans le cadre du calcul du coefficient de déperdition thermique du local est un modèle de simulation thermique dynamique pouvant comporter des caractéristiques de masques solaires environnants.

En particulier, le modèle de simulation thermique 41 du bâtiment 2 utilisé dans le cadre du calcul du coefficient de déperdition thermique du local comporte des caractéristiques de composition des parois et éventuellement la composition des menuiseries. Il peut avantageusement comporter en outre des caractéristiques de débit de renouvellement d'air et/ou de pertes de distribution du réseau de chauffage.

En outre, le modèle de simulation thermique 41 du bâtiment 2 est un modèle de simulation thermique dynamique comportant des caractéristiques concernant l'occupation du bâtiment telles que des horaires d'occupation et/ou un taux d'occupation. Il peut en outre comporter des caractéristiques telles que des usages électriques spécifiques, des consignes de température pour le chauffage ou la climatisation, et/ou des horaires de chauffage ou de climatisation.

Aussi, le modèle de simulation thermique 41 du bâtiment 2 est avantageusement un modèle de simulation thermique dynamique configuré pour prendre en compte les échanges de chaleur entre les locaux 20, 20b d'un même bâtiment 2.

Comme cela est illustré à la figure 1, un procédé de détermination selon l'invention pourra comporter avantageusement une étape de calibrage 120 du modèle de simulation thermique du bâtiment. Une telle étape permettra d'augmenter la précision du procédé et donc la valeur de la quantité d'énergie thermique fournie déterminée.

L'étape de calibrage 120 peut être réalisée à partir d'une première période de mesure et d'un algorithme de calibrage, de préférence un algorithme de calibrage bayésien, de sorte que les prédictions de consommations et de températures intérieures, au pas de temps horaire, du modèle de simulation thermique du bâtiment reproduisent au plus proche les mesures.

L'étape de calibrage 120 peut permettre de fiabiliser le modèle de simulation thermique de façon à s'assurer qu'il reproduit au plus juste le comportement thermique du bâtiment 2 réel. L'objectif de cette étape est d'obtenir une représentation fiable et précise du comportement réel du bâtiment en conciliant mesures in situ (à partir des données de températures ambiante et extérieure) et sorties du modèle de simulation thermique (températures et consommations simulées par le modèle).

Ainsi, cette étape permet d'une part d'intégrer les mesures provenant d'une maquette numérique générée par le modèle de simulation thermique et d'autre part de calibrer le modèle en prenant en compte des sources d'incertitudes et d'erreurs pouvant expliquer les différences entre les données simulées et les mesures. Avantageusement, l'estimation de l'erreur est basée sur l'utilisation d'un algorithme de calibrage bayésien.

Ainsi, cette étape de calibrage 120 peut entraîner une modification des paramètres du modèle de simulation thermique et cette modification se reflétera sur la valeur du coefficient de déperdition thermique du local générée pour une période donnée.

Dans le cadre de la présente invention, le modèle de simulation thermique 41 du bâtiment 2 peut être calibré, en fonction des périodes considérées, sous des conditions d'ensoleillement variant au moins de 50 Wh/m$^2$, par exemple au moins de 100 Wh/m$^2$ ; de température extérieure variant au moins de 10 °C, de préférence d'au moins 30 °C. En outre, il peut être calibré, en fonction des périodes considérées, sous des conditions d'humidité relative extérieure variant au moins de 15 %. En effet, les inventeurs ont déterminé que ces variables particulières avec ces niveaux d'amplitudes étaient les plus adaptées dans le cadre de la présente invention pour fournir une quantité d'énergie thermique déterminée la plus juste.

En outre, un procédé de détermination d'une quantité d'énergie thermique fournie à un local 20 d'un bâtiment 2 sur une période donnée, notamment s'il comporte une étape de calibrage préalable, pourra comporter une étape de calcul d'un score d'incertitude de la valeur de la quantité d'énergie thermique fournie déterminée.

En particulier, ce score d'incertitude pourra être calculé à partir d'une variable générée lors du processus de calibrage et représentant l'écart entre les prédictions de consommations et de températures intérieures au pas de temps horaire du modèle de simulation thermique du bâtiment et les mesures.

Comme cela est illustré à la figure 1, un procédé de détermination selon l'invention pourra comporter avantageusement une étape de calcul 130 d'au moins un coefficient de déperdition thermique du local à partir d'un modèle de simulation thermique du bâtiment.

Le coefficient de déperdition thermique, pour chaque local 20, peut donc être calculé à partir d'un modèle de simulation thermique du bâtiment non calibré ou de préférence calibré. Le coefficient de déperdition thermique ainsi estimé peut avantageusement correspondre à l'espérance des déperditions dans un local 20 dans des conditions variables d'exploitation du bâtiment 2. Ce calcul minimise l'erreur commise sur l'estimation des déperditions. Cette erreur peut être assez importante lorsqu'on réalise un calcul purement statique qui ne tient pas compte de l'inertie du bâtiment ni de l'aspect dynamique des sollicitations qu'il subit (météo, usages...).

Comme cela a été mentionné, idéalement, le calcul du coefficient de déperdition thermique nécessite de prendre en compte de nombreux éléments tels que le type, la surface et l'orientation des différentes parois (vitrées ou non) du logement, mais aussi les contacts mitoyens, le renouvellement d'air, les divers ponts thermiques ainsi que les apports gratuits liés aux apports solaires et aux usages (chaleur métabolique, électricité spécifique). Dans ce contexte, l'utilisation d'un modèle de simulation thermique calibré pour estimer ce coefficient de déperdition thermique prend tout son intérêt. L'objectif du calcul du coefficient de déperdition thermique du local est d'être capable d'estimer la valeur du coefficient G du local 20 tout en prenant en compte les différentes sources d'incertitudes liées au bâtiment 2 et à son environnement (incertitudes liées au bâti, aux systèmes, aux usages et aux conditions météorologiques).

Une analyse d'incertitude peut être réalisée visant à quantifier la variabilité des sorties du modèle de simulation thermique du bâtiment calibré (et en particulier les consommations) induite par l'incertitude sur les facteurs d'entrée du modèle. Selon un mode de réalisation, pour réaliser cette analyse d'incertitude, chaque paramètre statique est défini par une fonction de densité de probabilité d'une part et des modèles de variabilités des usages et des conditions météorologiques sont utilisés, d'autre part. Par exemple, plus de 500 simulations peuvent être réalisées sur la base de ces données de façon à obtenir une dispersion des résultats de consommation pour chaque local 20, et un ou plusieurs coefficients de déperdition thermique G du local peuvent être alors recalculés sur la base de ces simulations.

Ainsi, de façon préférée, le calcul 130 d'au moins un coefficient de déperdition thermique du local à partir d'un modèle de simulation thermique du bâtiment peut comporter, pour un local 20, le calcul d'au moins un coefficient de déperdition thermique à partir d'une pluralité de simulations dans lesquelles les valeurs de géométrie du local 20 et de composition des parois et éventuellement la composition des menuiseries, ont été modifiées de façon à intégrer des incertitudes associées au bâtiment 2.

De façon plus préférée, le calcul 130 d'au moins un coefficient de déperdition thermique du local à partir d'un modèle de simulation thermique du bâtiment peut comporter, pour un local 20, le calcul d'au moins un coefficient de déperdition thermique à partir d'une pluralité de simulations dans lesquelles en outre, les valeurs d'usage et/ou de conditions météorologiques (températures et ensoleillement) ont été modifiées de façon à intégrer des incertitudes associées aux usages et aux conditions météorologiques. Dans ces modes de réalisation, les valeurs peuvent être modifiées selon des fonctions de densité de probabilité et/ou des modèles de variabilités.

L'utilisation d'une analyse d'incertitude pour calculer les coefficients G permet d'apporter à l'invention une plus grande justesse par rapport aux méthodes classiques sans alourdir son fonctionnement.

En outre, le procédé de détermination selon l'invention pourra comporter l'utilisation de plusieurs coefficients de déperdition thermique, pour un même local 20, chacun calculé à partir du modèle de simulation thermique du bâtiment. De façon plus préférée, le procédé de détermination selon l'invention comportera l'utilisation d'au moins quatre coefficients de déperdition thermique. Avantageusement, ces coefficients de déperdition thermique seront spécifiques à une période donnée et par exemple à une période calendaire. De façon plus préférée, dans le cadre du procédé, le coefficient de déperdition thermique d'un local 20 est sélectionné parmi au moins deux, de préférence au moins trois et de façon plus préférée au moins quatre coefficients de déperdition thermique, chacun des coefficients de déperdition thermique correspondant à une période de l'année. De façon encore plus préférée, le coefficient de déperdition thermique est sélectionné parmi au moins 12 coefficients de déperdition thermique (coefficient mensuel) pour un même local 20.

Un procédé de détermination selon l'invention pourra comporter une étape de calcul 130 de plusieurs coefficients de déperdition thermique à partir d'un seul et même modèle de simulation thermique du bâtiment ou à partir de différents modèles de simulation thermique du bâtiment.

Un procédé de détermination selon l'invention comportera une détermination d'une quantité d'énergie thermique fournie à un local 20 d'un bâtiment 2 sur une période donnée.

Comme cela a déjà été explicité, la détermination prend en compte une pluralité de valeurs de températures ambiantes du bâtiment, une ou plusieurs valeurs de températures extérieures au bâtiment 2, un volume du local 20 du bâtiment et un coefficient de déperdition thermique du local.

Cette détermination pourra être assimilée au calcul réalisé par un répartiteur de frais de chauffage utilisant une mesure de la température ambiante des locaux. En particulier, la détermination selon l'invention pourra correspondre à une estimation, à partir de plusieurs valeurs de températures ambiantes et d'une ou de plusieurs valeurs de températures extérieures, la quantité d'énergie consommée à titre privatif dans les locaux devant faire l'objet d'une répartition.

Le calcul pourra par exemple prendre la forme suivante :

[MATH1]

$$E = \int_{t=0}^{t_{final}} G.V.(Ta(t) - Te(t))dt$$

avec :

$E$ : la quantité d'énergie consommée à titre privatif dans le local 20 étudié
$Ta$ : la température ambiante du local 20 étudié
$Te$ : la température extérieure du bâtiment 2
$V$ : le volume du local 20 étudié
$G$ : le coefficient de déperdition thermique du local 20 étudié
$t$ : le pas de temps

Exemple de formule avec une variable d'ajustement :

[MATH2]

$$E = \int_{t=0}^{t_{final}} \left[ G.V.\left(Ta(t) - Te(t)\right) + C_{ajustement}.V_{ajustement}(t) \right]dt$$

avec :

$E$ : la quantité d'énergie consommée à titre privatif dans le local 20 étudié
$Ta$ : la température ambiante du local 20 étudié
$Te$ : la température extérieure du bâtiment 2
$V$ : le volume du local 20 étudié
$G$ : le coefficient de déperdition thermique du local 20 étudié
$C_{ajustement}$ : le coefficient d'ajustement lié à la variable d'ajustement
$V_{ajustement}$ : la variable d'ajustement
$t$ : le pas de temps

Comme cela est présenté, la présente invention peut être mise en oeuvre sans variable d'ajustement, avec une variable d'ajustement ou avec plusieurs variables d'ajustement.

Avantageusement, la détermination pourra intégrer l'utilisation d'un ou de plusieurs coefficients d'ajustement calculés à partir du modèle de simulation thermique du bâtiment. L'utilisation de ces coefficients d'ajustement en combinaison avec des variables d'ajustement représentatives de facteurs environnementaux permettent d'améliorer encore la justesse du modèle.

Ainsi, le procédé selon l'invention comporte avantageusement une étape d'ajustement 140 de la quantité d'énergie thermique fournie, ladite étape d'ajustement 140 comportant l'utilisation d'un ou plusieurs coefficients d'ajustement, chaque coefficient d'ajustement étant appliqué à une variable d'ajustement.

La ou les variables d'ajustement pourront correspondre à des facteurs humains ou environnementaux ayant un impact sur l'énergie thermique à fournir au local. Ainsi, une variable d'ajustement peut correspondre à des données météorologiques telles que la pression atmosphérique ou la vitesse du vent.

Une variable d'ajustement pourra être mesurée directement au niveau du local 20 du bâtiment 2. Alternativement, une variable d'ajustement pourra être mesurée dans une zone géographique sur laquelle est positionné le bâtiment 2. Un autre moyen d'obtenir une variable d'ajustement pourra être de la modéliser, par exemple de manière probabiliste à partir de statistiques, ou encore de la générer à partir d'algorithmes d'apprentissage automatiques.

Une variable d'ajustement est de préférence calculée sur la base de données hebdomadaire, journalière ou horaire. Ces valeurs pourront être intégrées de façon à générer une valeur mensuelle. En particulier, si le coefficient de déperdition est mensuel, la variable d'ajustement est également mensuelle.

Par exemple, la détermination de la quantité d'énergie thermique fournie à un local 20 peut intégrer l'utilisation d'une variable d'ajustement sélectionnée parmi : une variable représentative des déperditions de chaleur liées aux ouvertures de fenêtres et/ou à la ventilation naturelle ; et/ou une variable représentative de l'utilisation d'un chauffage d'appoint. Cela permet d'intégrer les usages réels qui sont mesurés directement ou modélisés pour chaque local.

De façon préférée, la détermination de la quantité d'énergie thermique fournie à un local 20 intègre l'utilisation d'une variable d'ajustement représentative de la consommation d'électricité du local, y compris des chauffages d'appoints.

La détermination pourra aussi intégrer l'utilisation d'une variable d'ajustement représentative des déperditions thermiques dues aux ouvertures d'au moins une fenêtre 24 du local.

Dans ce cas et de façon préférée, la variable d'ajustement représentative des déperditions de chaleur liées aux ouvertures de fenêtres 24 pourra être calculée en fonction des changements de températures ambiantes du local et de l'humidité dans le local. En particulier, il pourra être utilisé une série temporelle des températures et des humidités intérieures et extérieures. Ainsi, cela permet d'accéder à une estimation précise des durées d'ouverture des fenêtres sans avoir à positionner un capteur sur chacune des fenêtres.

Un coefficient d'ajustement correspondra par exemple à une valeur utilisée avec une valeur de variable d'ajustement lors de la détermination de la quantité d'énergie thermique fournie à un local 20. En particulier, ce coefficient d'ajustement est utilisé dans une équation de détermination de la quantité d'énergie thermique fournie à un local 20. Cette valeur de coefficient d'ajustement est de préférence calculée à partir d'un modèle de simulation thermique du bâtiment 2.

Une valeur de coefficient d'ajustement pourra par exemple être mise à jour à une fréquence inférieure ou égale à 3 mois, de préférence inférieure ou égale à 2 mois et de façon plus préférée inférieure ou égale à 1 mois. Ainsi, il est possible de prendre en compte au mieux les valeurs des variables d'ajustement en fonction de la saison ou plus généralement du climat habituel à une période donnée. De façon préférée, le procédé utilise donc, pour un même coefficient d'ajustement, plusieurs valeurs prédéterminées de coefficient d'ajustement en fonction de la période donnée.

Dans le cadre du procédé de détermination de la quantité d'énergie thermique fournie à un local 20 selon l'invention, il sera avantageusement utilisé plusieurs couples variable d'ajustement/coefficient d'ajustement. Ainsi, il sera possible de calculer une quantité d'énergie thermique fournie plus juste en comparaison à d'autres systèmes.

En particulier, le procédé selon l'invention pourra comporter l'utilisation de plusieurs coefficients d'ajustement dont la valeur prédéterminée est sélectionnée en fonction de la période donnée. Par exemple, un coefficient d'ajustement associé à une variable d'ajustement représentative des déperditions thermiques dues aux ouvertures d'au moins une fenêtre 24 du local n'aura pas la même valeur au mois de juillet par rapport au mois de novembre. De façon préférée, le procédé selon l'invention comporte l'utilisation d'au moins deux coefficients d'ajustement, de façon plus préférée d'au moins trois coefficients d'ajustement et de façon encore plus préférée d'au moins quatre coefficients d'ajustement, pour un même local 20.

En outre, l'utilisation des variables d'ajustement et des coefficients d'ajustement permet de réduire la complexité du calcul de la quantité d'énergie thermique fournie tout en assurant une justesse élevée. De plus, cela permet de n'utiliser qu'une seule fois le modèle de simulation thermique pour produire de nombreuses valeurs de coefficients d'ajustement et valeurs de coefficient de déperdition thermique du local de façon à s'adapter de façon souple à la période de l'année considérée.

Comme cela a été mentionné, un des avantages du procédé selon l'invention est d'être en mesure de calculer un intervalle de confiance sur la quantité d'énergie thermique fournie déterminée.

Le calcul de cet intervalle de confiance peut reposer sur l'utilisation de valeurs d'incertitudes sur les variables d'ajustement utilisées lors de la détermination de la quantité d'énergie thermique fournie.

Les valeurs d'incertitude sur les variables d'ajustement peuvent être des valeurs prédéterminées ou des valeurs calculées en fonction de plusieurs valeurs de variable d'ajustement pour une même période (p. ex. écart-type). Alternativement, ou en complément, le calcul de cet intervalle de confiance peut reposer sur le calcul d'une valeur d'incertitude sur la quantité d'énergie thermique fournie calculée en des variables d'ajustement utilisées.

La performance de la présente invention est notamment illustrée par le tableau 1 ci-dessous.

[Table 1]

| | Justesse de la prédiction | |
| --- | --- | --- |
| | Peu isolé DPE < C | Bien isolé DPE >= C |
| Sans STD | 50 | 50 |
| + rayonnement | 55 | 55 |
| + chauffage d'appoint | 53 | 53 |
| + ouverture | 51 | 51 |
| Avec Coeff calculé à partir d'une STD sans rayonnement | 70 | 76 |
| Avec Coeff calculé à partir d'une STD avec rayonnement | 80 | 86 |
| + chauffage d'appoint | 89 | 92 |
| + ouverture | 82 | 88 |
| + ouverture + chauffage d'appoint | 100 | 100 |

Le tableau 1 illustre comment la justesse de la prédiction est améliorée en comparaison à des méthodes classiques de détermination d'une quantité d'énergie thermique fournie à un local 20 d'un bâtiment 2 sur une période donnée. En effet, sans l'utilisation d'un coefficient de déperdition thermique calculé à partir d'un modèle de simulation thermique dynamique, les résultats sont éloignés de la réalité et ne sont pas capables de prendre en compte correctement des facteurs extérieurs tels que le rayonnement, les ouvertures de fenêtres ou le chauffage d'appoint.

En outre, le tableau 1 illustre que la prise en compte du rayonnement dans le cadre d'un coefficient de déperdition thermique du local calculé à partir d'une simulation thermique dynamique permet d'améliorer la justesse et plus encore lorsque le bâtiment est bien isolé. En outre, le tableau 1 illustre que la prise en compte des variables d'ajustement (avec leur coefficient d'ajustement) ouvertures des fenêtres (« ouverture ») et utilisation d'un chauffage d'appoint (« chauffage d'appoint») permettent d'améliorer encore la justesse.

Comme cela a été présenté, le calcul du coefficient de déperdition thermique du local G est réalisé de préférence via une propagation d'incertitudes faisant varier de nombreux paramètres pouvant inclure le rayonnement et les apports internes (c.f. usages). Cela permet de prendre en compte l'impact moyen (l'espérance) de ces variables (rayonnement, apports internes, etc.).

De façon à ajuster encore le calcul de la consommation et approcher plus encore une consommation réelle d'énergie, la solution selon l'invention propose d'intégrer les variables d'ajustement. Cela permet d'ajuster le calcul de la consommation en considérant la valeur réelle des variables. Par exemple, lors d'un ajustement associé au rayonnement, le calcul du coefficient de déperdition thermique du local G permet de calculer une consommation moyenne en considérant un effet moyen du rayonnement (par ex 1200 kWh/m$^2$ sur l'année, ou 120 kWh/m$^2$ sur le mois). Le fait d'ajouter une variable d'ajustement sur le rayonnement va permettre de modifier le calcul de la consommation. Par exemple, si en réalité c'est 1300 kWh/m$^2$ qui est mesuré sur l'année (ou 100 kWh/m$^2$ sur la période). Le calcul de la valeur du coefficient de déperdition thermique G du local va être modifié grâce au coefficient d'ajustement du rayonnement et à la variable d'ajustement (par exemple *consommation ajustée = cons moy + Coeff* $\times \left( {}^{1300}/_{1200} - 1 \right)$).

Comme cela est illustré à la figure 1, un procédé de détermination selon l'invention pourra comporter avantageusement une étape d'analyse 150 des consommations électriques.

En particulier, l'utilisation de chauffage d'appoint peut être détectée à partir d'une analyse 150 des consommations électriques. L'analyse de ces consommations électriques pourra correspondre à une estimation par des modèles statistiques, à un calcul à partir d'analyse de factures d'électricité ou encore des mesures via des compteurs d'électricité électroniques.

Ainsi, comme cela est illustré à la figure 1, un procédé de détermination selon l'invention pourra comporter avantageusement une étape de quantification 160 de l'utilisation de dispositif de chauffage complémentaire.

Cette étape de quantification 160 de l'utilisation de dispositif de chauffage complémentaire pourra de préférence se baser notamment sur des données de compteurs d'électricité électroniques ou sur l'analyse de document comportant des rapports de consommation tels que des factures d'électricité.

Comme cela est illustré à la figure 1, un procédé de détermination selon l'invention pourra comporter avantageusement une étape de calcul 170 de frais de chauffage individualisé en fonction d'une quantité déterminée d'énergie thermique fournie.

En particulier, l'étape de calcul 170 de frais de chauffage individualisé pourra être une étape de calcul de frais de chauffage individualisé 170, pour un local 20 du bâtiment 2, en fonction d'une quantité déterminée d'énergie thermique fournie, par le dispositif collectif 30 de gestion thermique, audit local 20.

De façon préférée, le procédé pourra comporter une étape de calcul d'un cout prédit de confort, pour un local, en fonction d'une température intérieure attendue prédéterminée, des variables locales et des coefficients d'ajustement.

Comme cela est illustré à la figure 1, un procédé de détermination selon l'invention pourra comporter en outre une étape de calcul de gains attendus en termes de quantité d'énergie thermique fournie à un local en fonction de modification de valeurs de variable d'ajustement.

Ainsi, lorsqu'il met en oeuvre l'utilisation de variable d'ajustement, le procédé selon l'invention pourra comporter une étape de calcul de ce que pourrait être la quantité d'énergie thermique fournie à un local en fonction d'autres valeurs de variables d'ajustement. Par exemple, il pourrait être calculé quel serait le gain en termes de quantité d'énergie thermique fournie à un local si le nombre d'ouvertures de fenêtres était réduit par deux,

Une telle étape peut ensuite conduire à la génération de préconisations d'actions d'amélioration énergétique et pourrait permettre aux utilisateurs de réduire les coûts de chauffages.

Comme cela est illustré à la figure 1, un procédé de détermination selon l'invention pourra comporter en outre une étape 180 de transmission de données à un dispositif électronique de visualisation 50.

Les données transmises pourront par exemple comporte la quantité d'énergie thermique fournie déterminée.

Selon un autre aspect, l'invention porte sur un répartiteur 10 pour la détermination d'une quantité d'énergie thermique fournie, par un dispositif collectif 30 de gestion thermique, à un local 20 d'un bâtiment 2 pour une période donnée.

Le répartiteur 10 pourra correspondre à un dispositif électronique et il pourra comporter un ou plusieurs processeurs. De façon préférée, un répartiteur 10 selon l'invention comporte un ou plusieurs processeurs configurés pour exécuter un procédé selon l'invention, de préférence le procédé 100 de détermination d'une quantité d'énergie thermique fournie, et ses différents modes de réalisation, préférés, avantageux ou non.

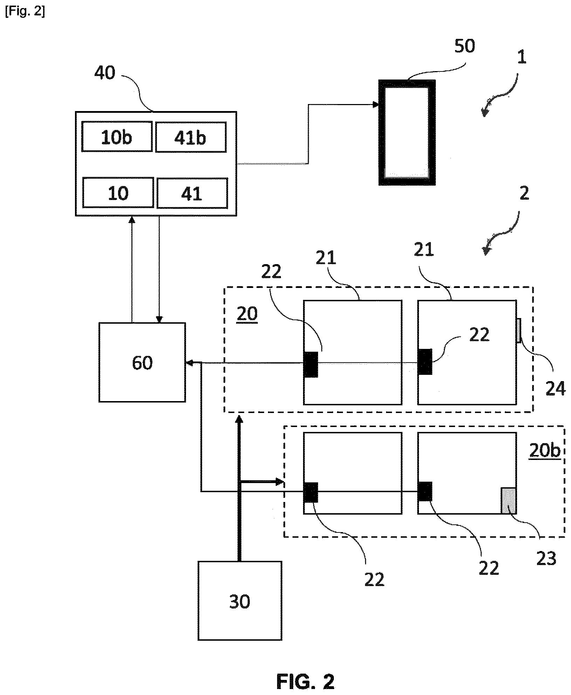

Le répartiteur 10 pourra être installé dans le bâtiment 2. Toutefois, comme illustré à la figure 2, le répartiteur 10 pourra être localisé en dehors du bâtiment 2 abritant le local 20 étudié. Par exemple, le répartiteur 10 pourra correspondre à un module fonctionnel d'un dispositif électronique, tel qu'un module fonctionnel d'un serveur informatique. Dans ces conditions, un même serveur informatique 40 pourra héberger plusieurs répartiteurs 10, 10b chacun dédié à un bâtiment 2. Comme illustré à la figure 2, le serveur informatique 40 pourra également héberger les modèles de simulation thermique 41, 41b ayant été utilisés pour calculer les coefficients de déperdition thermique utilisés par les répartiteurs 10, 10b. Alternativement et de façon préférée, il n'est pas nécessaire pour le répartiteur de stocker les modèles de simulation thermique utilisés pour la génération des coefficients de déperdition thermique. En effet, une fois une pluralité de coefficient thermique générée, au moins un par local 20, le modèle n'est plus essentiel à la détermination d'une quantité d'énergie thermique fournie. Cela permet à la demanderesse de proposer une solution légère et réactive pour des calculs en temps réel sans sacrifier la justesse du résultat.

Le répartiteur 10, en particulier les uns ou plusieurs processeurs du répartiteur 10 sont de préférence configurés pour utiliser une pluralité de valeurs de températures ambiantes du bâtiment 2, une valeur de température extérieure au bâtiment 2, un volume du local 20 et un coefficient de déperdition thermique du local, pour déterminer une quantité d'énergie thermique fournie, par un dispositif collectif 30 de gestion thermique, à un local 20 d'un bâtiment 2 pour une période donnée.

Avantageusement, le répartiteur 10 utilise un coefficient de déperdition thermique du local calculé à partir d'un modèle de simulation thermique 41 du bâtiment 2 prenant en compte la géométrie du local 20 et la composition des parois et éventuellement la composition des menuiseries dudit local 20.

En outre, le modèle de simulation thermique 41 du bâtiment 2 peut prendre en compte des données représentatives de rayonnement solaire local sur la période donnée.

Comme cela a été décrit de façon préférée, les données de rayonnement solaire local ne sont pas mesurées, mais prises en compte, car générées sur la base d'une modélisation utilisant des données historiques locales.

Le répartiteur 10 peut en particulier comporter un ou plusieurs processeurs configurés pour calculer des données de répartition pour répartir les frais financiers associés au chauffage collectif en fonction de l'ensemble des quantités d'énergie fournies déterminées pour chacun des locaux 20.

Selon un autre aspect, l'invention porte sur un système 1 de répartition des frais de chauffage. Le système 1 de répartition des frais de chauffage pourra comporter un dispositif électronique équipé d'un ou plusieurs processeurs. De façon préférée, un système 1 de répartition des frais de chauffage selon l'invention comporte un ou plusieurs processeurs configurés pour exécuter un procédé selon l'invention, de préférence le procédé 100 de détermination d'une quantité d'énergie thermique fournie, et ses différents modes de réalisation, préférés, avantageux ou non.

En particulier, un système 1 de répartition des frais de chauffage pourra comporter un répartiteur 10 selon l'invention. Comme mentionné ce répartiteur peut être supporté par un serveur informatique 40. En outre, le serveur informatique 40 peut être configuré pour communiquer avec un dispositif électronique de visualisation 50 ou tout autre dispositif électronique apte à recevoir des données relatives aux frais de chauffage ou à la quantité d'énergie thermique fournie à un local.

En outre, un système 1 de répartition des frais de chauffage selon l'invention pourra comporter plusieurs dispositifs électroniques de mesure de température 22. Ces dispositifs pourront être des dispositifs électroniques de mesure de température 22 dédiés au système 1 de répartition des frais de chauffage selon l'invention ou bien des dispositifs déjà présents dans un logement et configurés pour communiquer des données au système 1 de répartition des frais de chauffage selon l'invention. Par exemple, ces dispositifs pourront être intégrés dans des détecteurs de fumée ou des thermostats connectés.

Comme illustré à la figure 2, les dispositifs électroniques de mesure de température 22 pourront être positionnés dans différentes zones ou pièces 21 d'un local 20. Par exemple, plusieurs dispositifs électroniques de mesure de température 22 pourront être positionnés, dans un même local 20, dans des pièces 21 comportant ou non des moyens de chauffage d'appoint 23.

En particulier, ces dispositifs électroniques de mesure de température 22 pourront comprendre des capteurs venant en complément d'un capteur de température. En particulier, un dispositif électronique de mesure de température 22 pourra comporter un capteur d'humidité. Il pourra également comporter un capteur de $CO_2$. Avec de tels capteurs, le positionnement de ce dispositif électronique de mesure de température 22 dans une pièce comportant une fenêtre 24 peut permettre la génération de données suffisantes pour estimer le temps d'ouverture de la fenêtre 24.

Les dispositifs électroniques de mesure de température 22 seront de préférence configurés pour envoyer des données mesurées au répartiteur 10, directement ou indirectement. Les températures pourront être mesurées au moins une fois par jour, de préférence au moins deux fois par jour, de façon plus préférée au moins toutes les heures et de façon plus préférée au moins toutes les 30 minutes. Par contre, ces données pourront être stockées sur le dispositif électronique de mesure de température 22 et pourront être envoyées directement ou indirectement au répartiteur 10 au moins une fois par mois, de préférence au moins toutes les semaines, de façon plus préférée au moins tous les jours et de façon plus préférée au moins six fois par jour.

Les dispositifs électroniques de mesure de température 22 seront de préférence configurés pour envoyer des données mesurées directement au répartiteur 10 via une communication sans fil ou une connexion filaire, de façon plus préférée via une communication sans fil. Alternativement, ces données pourront être envoyées via une connexion sans fil ou une connexion filaire à un collecteur de données 60.

Le collecteur de données 60 peut notamment être situé dans une partie commune du bâtiment 2 ou à l'extérieur du bâtiment 2. Lorsque le système 1 comportera un collecteur de données 60, il pourra être configuré pour mettre en oeuvre une première communication sans fil, mise en oeuvre dans le bâtiment 2, entre le collecteur de données 60 et les dispositifs électroniques de mesure de température 22 associée à chaque local d'une part et une deuxième communication sans fil, depuis le collecteur de données 60 du bâtiment 2 vers un répartiteur 10, généralement centralisé et accessible via un réseau de communication comme l'Internet.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Procédé (100) de répartition de frais énergétiques dans un bâtiment collectif (2) comportant plusieurs locaux individuels (20) et au moins un dispositif collectif (30) de gestion thermique, le procédé (100) étant applicable à tous les locaux individuels (20) du bâtiment collectif (2) et comprenant la détermination d'une quantité d'énergie thermique fournie par le au moins un dispositif collectif (30) de gestion thermique, à au moins un local individuel (20) du bâtiment collectif (2), sur une période donnée, ladite détermination, réalisée par un ou plusieurs processeurs, comportant l'utilisation,

   - d'un modèle de simulation,
   - d'une pluralité de valeurs de températures ambiantes du bâtiment collectif (2), la pluralité de valeurs de températures ambiantes du bâtiment collectif (2) comportant plusieurs températures du local individuel (20),
   - d'une ou plusieurs valeurs de températures extérieures au bâtiment collectif (2),
   - d'un volume du local individuel (20), et
   - d'au moins un coefficient de déperdition thermique du local individuel (20), et
   - le calcul (130) de l'au moins un coefficient de déperdition thermique du local individuel (20) à partir du modèle de simulation

caractérisé en ce que le modèle de simulation est un modèle de simulation thermique (41) du bâtiment collectif (2) qui représente virtuellement le bâtiment collectif (2) et qui prend en compte, pour chaque local individuel (20), une géométrie du local individuel (20) et une composition des parois du local individuel (20), ainsi que les échanges thermiques entre différents locaux du bâtiment collectif (2);

et en ce que

le procédé utilise plusieurs températures de locaux ou espaces communs du bâtiment collectif (2) qui sont adjacents au local individuel (20).

**2.** Procédé (100) selon la revendication 1, dans lequel lorsque ledit local individuel (20) est en outre défini par une composition des menuiseries, le procédé étant **caractérisé en ce que** le modèle de simulation thermique (41) du bâtiment collectif (2) prend en compte en outre la composition des menuiseries.

**3.** Procédé (100) selon l'une quelconque des revendications 1 à 2, **caractérisé en ce que** le modèle de simulation thermique (41) du bâtiment collectif (2) prend en compte en outre des données représentatives de rayonnement solaire local sur la période donnée.

**4.** Procédé (100) selon l'une quelconque des revendications 1 ou 3, **caractérisé en ce que** le modèle de simulation thermique (41) du bâtiment collectif (2) est un modèle de simulation thermique (41) dynamique du bâtiment collectif (2).

**5.** Procédé (100) selon l'une quelconque des revendications 1 à 4, **caractérisé en ce que** le au moins un coefficient de déperdition thermique du local individuel (20) est sélectionné parmi au moins deux coefficients de déperdition thermique prédéterminés, lesdits coefficients de déperdition thermique prédéterminés correspondant chacun à une période temporelle.

**6.** Procédé (100) selon l'une quelconque des revendications 1 à 5, **caractérisé en ce que** la détermination de la quantité d'énergie thermique fournie par le au moins un dispositif collectif (30) de gestion thermique, à l'au moins un local individuel (20) du bâtiment collectif (2), comporte l'utilisation d'un ou plusieurs coefficients d'ajustement, chaque coefficient d'ajustement étant appliqué à une variable d'ajustement mesurée ou calculée pour la période donnée.

**7.** Procédé (100) selon la revendication 6, **caractérisé en ce que** la variable d'ajustement est sélectionnée parmi : une variable représentative des déperditions de chaleur liées aux ouvertures de fenêtres, une variable représentative du taux d'occupation du local individuel (20), une variable représentative des conditions météorologiques et/ou une variable représentative de l'utilisation d'un chauffage d'appoint.

**8.** Procédé (100) selon l'une quelconque des revendications 6 à 7, **caractérisé en ce que** la variable d'ajustement est mesurée directement au niveau du local individuel (20) du bâtiment collectif (2), modélisée de manière probabiliste à partir de statistiques, ou reconstituée à partir de mesures d'algorithmes d'apprentissage automatique.

**9.** Procédé (100) selon l'une quelconque des revendications 1 à 8, **caractérisé en ce qu'**il comporte une étape de calibrage (120) du modèle de simulation thermique du bâtiment collectif (2), ladite étape de calibrage (120) est de préférence réalisée à partir d'une première période de mesure de valeurs de températures ambiantes et extérieures et d'un algorithme de calibrage bayésien de sorte que des températures calculées par le modèle de simulation thermique (41) du bâtiment collectif (2) reproduisent au plus proche les valeurs de températures mesurées.

**10.** Procédé (100) selon l'une quelconque des revendications 1 à 9, **caractérisé en ce que** la température ambiante du local individuel (20) correspond à des températures mesurées dans plusieurs emplacements du local individuel (20).

**11.** Procédé (100) selon l'une quelconque des revendications 1 à 10, **caractérisé en ce qu'**il comporte une étape de calcul de frais de chauffage individualisé (170), pour un local individuel (20) du bâtiment collectif (2), en fonction d'une quantité déterminée d'énergie thermique fournie, par le dispositif collectif (30) de gestion thermique, audit local individuel (20).

**12.** Procédé (100) selon la revendication 11, **caractérisé en ce que** l'étape de calcul de frais de chauffage individualisé (170) prend en compte des caractéristiques d'orientation et de positionnement du local individuel (20) dans le bâtiment collectif (2), de façon à corriger les disparités entre les locaux ou espaces communs du bâtiment collectif (2).

13. Procédé (100) selon l'une quelconque des revendications 1 à 12, **caractérisé en ce que** le calcul (130) d'au moins un coefficient de déperdition thermique du local individuel (20) à partir d'un modèle de simulation thermique du bâtiment peut comporter, pour un local individuel (20), le calcul d'au moins un coefficient de déperdition thermique à partir d'une pluralité de simulations dans lesquelles les valeurs de géométrie du local individuel (20) et de composition des parois ont été modifiées de façon à intégrer des incertitudes associées au bâtiment collectif (2).

14. Procédé (100) selon l'une quelconque des revendications précédentes lorsqu'elles dépendent de la revendication 2, **caractérisé en ce que** le calcul (130) d'au moins un coefficient de déperdition thermique du local individuel (20) à partir d'un modèle de simulation thermique (41) du bâtiment collectif (2) peut comporter, pour un local individuel (20), le calcul d'au moins un coefficient de déperdition thermique à partir d'une pluralité de simulations dans lesquelles les valeurs de composition des menuiseries ont été modifiées de façon à intégrer des incertitudes associées au bâtiment collectif (2).

15. Procédé (100) selon l'une quelconque des revendications 1 à 14, **caractérisé en ce que** le calcul (130) d'au moins un coefficient de déperdition thermique du local individuel (20) à partir d'un modèle de simulation thermique (41) du bâtiment peut comporter, pour un local individuel (20), le calcul d'au moins un coefficient de déperdition thermique à partir d'une pluralité de simulations dans lesquelles en outre, des valeurs d'usage et/ou de conditions météorologiques ont été modifiées de façon à intégrer des incertitudes associées aux usages et aux conditions météorologiques.

16. Répartiteur (10) de frais énergétiques dans un bâtiment collectif (2) comportant plusieurs locaux individuels (20) et au moins un dispositif collectif (30) de gestion thermique, le répartiteur étant applicable à tous les locaux individuels (20) du bâtiment collectif (2) et comprenant la détermination d'une quantité d'énergie thermique fournie par le au moins dispositif collectif (30) de gestion thermique, à au moins un local individuel (20) du bâtiment collectif (2), sur une période donnée, ledit répartiteur (10) comprenant un ou plusieurs processeurs configurés pour déterminer la quantité d'énergie thermique fournie en utilisant,

   - un modèle de simulation,
   - une pluralité de valeurs températures ambiantes du bâtiment collectif (2), la pluralité de valeurs de températures ambiantes du bâtiment collectif (2) comportant plusieurs températures du local individuel (20),
   - une ou plusieurs valeurs de températures extérieures au bâtiment collectif (2),
   - un volume du local individuel (20), et
   - au moins un coefficient de déperdition thermique du local individuel (20), ledit répartiteur (10) étant **caractérisé en ce que** ledit répartiteur (10) est configuré pour calculer (130) l'au moins un coefficient de déperdition thermique du local individuel (20) à partir du modèle de simulation,
   **en ce que**
   le modèle de simulation est un modèle de simulation thermique (41) du bâtiment collectif (2) qui représente virtuellement le bâtiment collectif (2) et qui prend en compte, pour chaque local individuel (20), une géométrie du local individuel (20) et une composition des parois du local individuel (20), ainsi que les échanges thermiques entre différents locaux du bâtiment collectif (2);
   et **en ce que** ledit répartiteur (10) comprenant un ou plusieurs processeurs configurés pour déterminer la quantité d'énergie thermique fournie en utilisant en outre plusieurs températures de locaux ou espaces communs du bâtiment collectif (2) qui sont adjacents au local individuel (20).

17. Répartiteur (10) selon la revendication 16, dans lequel lorsque ledit local individuel (20) est en outre défini par une composition des menuiseries, le système étant **caractérisé en ce que** le modèle de simulation thermique (41) du bâtiment collectif (2) prend en compte en outre la composition des menuiseries.

18. Système (1) de répartition de frais de chauffage comportant un répartiteur (10) selon l'une quelconque des revendications 16 à 17.

**Patentansprüche**

1. Verfahren (100) zum Verteilen von Energiekosten in einem Gemeinschaftsgebäude (2), das mehrere Einzelräume (20) und mindestens eine gemeinschaftliche Wärmemanagementvorrichtung (30) umfasst, wobei das Verfahren (100) auf alle Einzelräume (20) des Gemeinschaftsgebäudes (2) anwendbar ist und die Bestimmung einer Wärmeenergiemenge umfasst, die von der mindestens einen gemeinschaftlichen Wärmemanagementvorrichtung (30) für mindestens einen Einzelraum (20) des Gemeinschaftsgebäudes (2) über einen gewissen Zeitraum bereitgestellt wird, wobei die Bestimmung, die durch einen oder mehrere Prozessoren erfolgt, die Verwendung umfasst von

- einem Simulationsmodell,
- einer Vielzahl von Werten von Umgebungstemperaturen des Gemeinschaftsgebäudes (2), wobei die Vielzahl von Werten von Umgebungstemperaturen des Gemeinschaftsgebäudes (2) mehrere Temperaturen des Einzelraums (CO) umfasst,
- einem oder mehreren Werten von Außentemperaturen des Gemeinschaftsgebäudes (2),
- einem Volumen des Einzelraums (20), und
- mindestens einem Wärmeverlustkoeffizienten des Einzelraums (20), und
- der Berechnung (130) des mindestens einen Wärmeverlustkoeffizienten des Einzelraums (20) ausgehend von dem Simulationsmodell,
**dadurch gekennzeichnet, dass** das Simulationsmodell ein Wärmesimulationsmodell (41) des Gemeinschaftsgebäudes (2) ist, welches das Gemeinschaftsgebäude (2) virtuell darstellt und das für jeden Einzelraum (20) eine Geometrie des Einzelraums (20) und eine Zusammensetzung der Wände des Einzelraums (20) sowie den Wärmeaustausch zwischen verschiedenen Räumen des Gemeinschaftsgebäudes (2) berücksichtigt; und dass das Verfahren mehrere Temperaturen von gemeinsamen Räumen oder Plätzen des Gemeinschaftsgebäudes (2), die an den Einzelraum (20) angrenzend sind, verwendet.

2. Verfahren (100) nach Anspruch 1, wobei, wenn der Einzelraum (20) außerdem durch eine Zusammensetzung von Holzbauten definiert ist, das Verfahren **dadurch gekennzeichnet ist, dass** das Wärmesimulationsmodell (41) des Gemeinschaftsgebäudes (2) ferner die Zusammensetzung der Holzbauten berücksichtigt.

3. Verfahren (100) nach einem der Ansprüche 1 bis 2, **dadurch gekennzeichnet, dass** das Wärmesimulationsmodell (41) des Gemeinschaftsgebäudes (2) außerdem Daten berücksichtigt, welche die lokale Sonneneinstrahlung über den gegebenen Zeitraum darstellen.

4. Verfahren (100) nach einem der Ansprüche 1 oder 3, **dadurch gekennzeichnet, dass** das Wärmesimulationsmodell (41) des Gemeinschaftsgebäudes (2) ein dynamisches Wärmesimulationsmodell (41) des Gemeinschaftsgebäudes (2) ist.

5. Verfahren (100) nach einem der Ansprüche 1 bis 4, **dadurch gekennzeichnet, dass** der mindestens eine Wärmeverlustkoeffizient des Einzelraums (20) aus mindestens zwei vorbestimmten Wärmeverlustkoeffizienten ausgewählt wird, wobei die vorbestimmten Wärmeverlustkoeffizienten jeweils einem Zeitraum entsprechen.

6. Verfahren (100) nach einem der Ansprüche 1 bis 5, **dadurch gekennzeichnet, dass** die Bestimmung der Wärmeenergiemenge, die von der mindestens einen gemeinschaftlichen Wärmemanagementvorrichtung (30) für den mindestens einen Einzelraum (20) des Gemeinschaftsgebäudes (2) bereitgestellt wird, die Verwendung eines oder mehrerer Anpassungskoeffizienten umfasst, wobei jeder Anpassungskoeffizient auf eine Anpassungsvariable angewendet wird, die für den gegebenen Zeitraum gemessen oder berechnet wird.

7. Verfahren (100) nach Anspruch 6, **dadurch gekennzeichnet, dass** die Anpassungsvariable ausgewählt wird aus: einer Variablen, welche Wärmeverluste darstellt, die mit dem Öffnen von Fenstern verbunden sind, einer Variablen, die Belegungsraten des Einzelraums (20) darstellt, einer Variablen, die Wetterbedingungen darstellt, und/oder einer Variablen, welche die Verwendung einer Raumheizung darstellt.

8. Verfahren (100) nach einem der Ansprüche 6 bis 7, **dadurch gekennzeichnet, dass** die Anpassungsvariable direkt am Einzelraum (20) des Gemeinschaftsgebäudes (2) gemessen wird, probabilistisch aus statistischen Daten modelliert wird oder aus Messungen eines automatischen Lernalgorithmus wiederhergestellt wird.

9. Verfahren (100) nach einem der Ansprüche 1 bis 8, **dadurch gekennzeichnet, dass** es einen Schritt (120) zum Kalibrieren des Wärmesimulationsmodells des Gemeinschaftsgebäudes (2) umfasst, wobei der Kalibrierungsschritt (120) bevorzugt ausgehend von einem ersten Zeitraum zum Messen von Werten von Umgebungs- und Außentemperaturen und einem bayesschen Kalibrierungsalgorithmus erfolgt, so dass Temperaturen, die durch das Wärmesimulationsmodell (41) des Gemeinschaftsgebäudes (2) berechnet werden, die gemessenen Temperaturwerte möglichst getreu wiedergeben.

10. Verfahren (100) nach einem der Ansprüche 1 bis 9, **dadurch gekennzeichnet, dass** die Umgebungstemperatur des Einzelraums (20) Temperaturen entspricht, die an mehreren Stellen des Einzelraums (20) gemessen werden.

11. Verfahren (100) nach einem der Ansprüche 1 bis 10, **dadurch gekennzeichnet, dass** es einen Schritt zum Berechnen von individualisierten Heizkosten (170) für einen Einzelraum (20) des Gemeinschaftsgebäudes (2) in Abhängigkeit von einer bestimmten Menge von Wärmeenergie, die von der gemeinschaftlichen Wärmemanagementvorrichtung (30) für den Einzelraum (20) bereitgestellt wird, umfasst.

12. Verfahren (100) nach Anspruch 11, **dadurch gekennzeichnet, dass** der Schritt zum Berechnen von individualisierten Heizkosten (170) Kennzeichen der Ausrichtung und Positionierung des Einzelraums (20) in dem Gemeinschaftsgebäude (2) berücksichtigt, um Ungleichheiten zwischen den gemeinsamen Räumen oder Plätzen des Gemeinschaftsgebäudes (2) zu korrigieren.

13. Verfahren (100) nach einem der Ansprüche 1 bis 12, **dadurch gekennzeichnet, dass** die Berechnung (130) mindestens eines Wärmeverlustkoeffizienten des Einzelraums (20) ausgehend von einem Wärmesimulationsmodell des Gebäudes für einen Einzelraum (20) die Berechnung mindestens eines Wärmeverlustkoeffizienten aus einer Vielzahl von Simulationen umfassen kann, bei denen die Geometriewerte des Einzelraums (2D) und der Zusammensetzung der Wände geändert wurden, um Ungewissheiten einzubinden, die mit dem Gemeinschaftsgebäude (2) verbunden sind.

14. Verfahren (100) nach einem der vorhergehenden Ansprüche in Abhängigkeit von Anspruch 2, **dadurch gekennzeichnet, dass** die Berechnung (130) mindestens eines Wärmeverlustkoeffizienten des Einzelraums (20) ausgehend von einem Wärmesimulationsmodell (41) des Gemeinschaftsgebäudes (2) für einen Einzelraum (20) die Berechnung mindestens eines Wärmeverlustkoeffizienten ausgehend von einer Vielzahl von Simulationen, bei denen die Werte der Zusammensetzung der Holzbauten geändert wurden, um Ungewissheiten einzubinden, die mit dem Gemeinschaftsgebäude (2) zusammenhängen, umfassen kann.

15. Verfahren (100) nach einem der Ansprüche 1 bis 14, **dadurch gekennzeichnet, dass** die Berechnung (130) mindestens eines Wärmeverlustkoeffizienten des Einzelraums (20) ausgehend von einem Wärmesimulationsmodell (41) des Gebäudes für einen Einzelraum (20) die Berechnung mindestens eines Wärmeverlustkoeffizienten ausgehend von einer Vielzahl von Simulationen, bei denen ferner Werte des Gebrauchs und/oder der Wetterbedingungen geändert wurden, um Ungewissheiten einzubinden, die mit dem Gebrauch und den Wetterbedingungen zusammenhängen, umfassen kann.

16. Verteiler (10) von Energiekosten in einem Gemeinschaftsgebäude (2), das mehrere Einzelräume (20) und mindestens eine gemeinschaftliche Wärmemanagementvorrichtung (30) umfasst, wobei der Verteiler auf alle Einzelräume (20) des Gemeinschaftsgebäudes (2) anwendbar ist und die Bestimmung einer Wärmeenergiemenge umfasst, die von der mindestens einen gemeinschaftlichen Wärmemanagementvorrichtung (30) für mindestens einen Einzelraum (20) des Gemeinschaftsgebäudes (2) über einen gewissen Zeitraum bereitgestellt wird, wobei der Verteiler (10) einen oder mehrere Prozessoren umfasst, die dazu konfiguriert sind, die bereitgestellte Wärmeenergiemenge zu bestimmen unter Verwendung von

- einem Simulationsmodell,
- einer Vielzahl von Werten von Umgebungstemperaturen des Gemeinschaftsgebäude (2), wobei die Vielzahl von Werten von Umgebungstemperaturen des Gemeinschaftsgebäudes (2) mehrere Temperaturen des Einzelraums (CO) umfasst,
- einem oder mehreren Werten von Außentemperaturen des Gemeinschaftsgebäudes (2),
- einem Volumen des Einzelraums (20), und
- mindestens einem Wärmeverlustkoeffizienten des Einzelraums (20),
wobei der Verteiler (10) **dadurch gekennzeichnet ist, dass** der Verteiler (10) dazu konfiguriert ist, den (130) mindestens einen Wärmeverlustkoeffizienten des Einzelraums (20) ausgehend von dem Simulationsmodell zu berechnen,
dass das Simulationsmodell ein Wärmesimulationsmodell (41) des Gemeinschaftsgebäudes (2) ist, das virtuell das Gemeinschaftsgebäude (2) darstellt, und das für jeden Einzelraum (20) eine Geometrie des Einzelraums (20) und eine Zusammensetzung der Wände des Einzelraums (20) sowie den Wärmeaustausch zwischen verschiedenen Räumen des Gemeinschaftsgebäudes (2) berücksichtigt;
und dass der Verteiler (10) einen oder mehrere Prozessoren umfasst, die dazu konfiguriert sind, die Wärmeenergiemenge zu bestimmen, indem ferner mehrere Temperaturen von gemeinsamen Räumen oder Plätzen des Gemeinschaftsgebäudes (2), die angrenzend an den Einzelraum (20) sind, verwendet werden.

20

**17.** Verteiler (10) nach Anspruch 16, wobei, wenn der Einzelraum (20) außerdem durch eine Zusammensetzung von Holzbauten definiert ist, das System **dadurch gekennzeichnet ist, dass** das Wärmesimulationsmodell (41) des Gemeinschaftsgebäudes (2) ferner die Zusammensetzung der Holzbauten berücksichtigt.

**18.** System (1) zum Verteilen von Heizungskosten, umfassend einen Verteiler (10) nach einem der Ansprüche 16 bis 17.

**Claims**

**1.** A method (100) for allocating energy costs in a collective building (2) including a plurality of individual premises (20) and at least one collective heat management device (30), the method (100) being applicable to all the individual premises (20) of the collective building (2) and comprising determining an amount of thermal energy supplied by the at least one collective heat management device (30), to at least one individual premises (20) of the collective building (2), over a given period, said determination, carried out by one or more processors, including the use of,

- a simulation model,
- a plurality of ambient temperature values of the collective building (2), the plurality of ambient temperature values of the collective building (2) including a plurality of temperatures of the individual premises(20),
- one or more values of temperatures outside the collective building (2),
- a volume of the individual premises (20), and
- at least one heat loss coefficient of the individual premises (20), and
- the calculation (130) of the at least one heat loss coefficient of the individual premises (20) on the basis of the simulation model

**characterized in that** the simulation model is a thermal simulation model (41) of the collective building (2) which virtually represents the collective building (2) and which takes into account, for each individual premises (20), a geometry of the individual premises (20) and a composition of the walls of the individual premises (20), as well as the heat exchange between various premises of the collective building (2);
and **in that**
the method uses a plurality of temperatures of premises or common spaces of the collective building (2) which are adjacent to the individual premises (20).

**2.** The method (100) according to claim 1, wherein when said individual premises (20) is additionally defined by a joinery composition, the method being **characterised in that** the thermal simulation model (41) of the collective building (2) additionally takes into account the joinery composition.

**3.** The method (100) according to any one of claims 1 to 2, **characterised in that** the thermal simulation model (41) of the collective building (2) additionally takes into account data representative of local solar radiation over the given period.

**4.** The method (100) according to any one of claims 1 or 3, **characterised in that** the thermal simulation model (41) of the collective building (2) is a dynamic thermal simulation model (41) of the collective building (2).

**5.** The method (100) according to any one of claims 1 to 4, **characterised in that** the at least one heat loss coefficient of the individual premises (20) is selected from at least two predetermined heat loss coefficients, said predetermined heat loss coefficients each corresponding to a time period.

**6.** The method (100) according to any one of claims 1 to 5, **characterised in that** the determination of the amount of thermal energy supplied by the at least one collective heat management device (30) to the at least one individual premises (20) of the collective building (2), includes the use of one or more adjustment coefficients, each adjustment coefficient being applied to an adjustment variable measured or calculated for the given period.

**7.** The method (100) according to claim 6, **characterised in that** the adjustment variable is selected from: a variable representative of heat losses linked to the window openings, a variable representative of the level of occupation of the individual premises (20), a variable representative of the meteorological conditions and/or a variable representative of the use of auxiliary heating.

**8.** The method (100) according to any one of claims 6 to 7, **characterised in that** the adjustment variable is measured directly in the individual premises (20) of the collective building (2), modelled in a probabilistic manner on the basis of statistics, or reconstructed on the basis of measurements of machine learning algorithms.

9. The method (100) according to any one of claims 1 to 8, **characterised in that** it includes a calibration step (120) of the thermal simulation model of the collective building (2), said calibration step (120) is preferably carried out on the basis of a first measurement period of ambient and outside temperature values and of a Bayesian calibration algorithm such that temperatures calculated by the thermal simulation model (41) of the collective building (2) reproduces as closely as possible the measured temperature values.

10. The method (100) according to any one of claims 1 to 9, **characterised in that** the ambient temperature of the individual premises (20) corresponds to the temperatures measured in a plurality of locations in the individual premises (20) .

11. The method (100) according to any one of claims 1 to 10, **characterised in that** it includes a step of calculating individualised heating costs (170) for an individual premises (20) of the collective building (2), as a function of a determined amount of thermal energy supplied by the collective heat management device (30) to said individual premises (20).

12. The method (100) according to claim 11, **characterised in that** the step of calculating individualised heating costs (170) takes into account characteristics of orientation and positioning of the individual premises (20) in the collective building (2), in such a way as to correct the disparities between the premises or common spaces of the collective building (2).

13. The method (100) according to any one of claims 1 to 12, **characterised in that** the calculation (130) of at least one heat loss coefficient of the individual premises (20) on the basis of a thermal simulation model of the building can include, for an individual premises (20), the calculation of at least one heat loss coefficient on the basis of a plurality of simulations in which the values for the geometry of the individual premises (20) and composition of the walls have been modified in such a way as to incorporate the uncertainties associated with the collective building (2).

14. The method (100) according to any one of preceding claims when they are dependent on claim 2, **characterised in that** the calculation (130) of at least one heat loss coefficient of the individual premises (20) on the basis of a thermal simulation model (41) of the collective building (2) can include, for an individual premises (20), the calculation of at least one heat loss coefficient on the basis of a plurality of simulations in which the joinery composition values have been modified in such a way as to incorporate the uncertainties associated with the collective building (2).

15. The method (100) according to any one of claims 1 to 14, **characterised in that** the calculation (130) of at least one heat loss coefficient of the individual premises (20) on the basis of a thermal simulation model (41) of the building can include, for an individual premises (20), the calculation of at least one heat loss coefficient on the basis of a plurality of simulations in which, in addition, values for use and/or meteorological conditions have been modified in such a way as to incorporate the uncertainties associated with the uses and with the meteorological conditions.

16. An allocator(10) of energy costs in a collective building (2) including a plurality of individual premises (20) and at least one collective heat management device (30), the allocator being applicable to all the individual premises (20) of the collective building (2) and comprising the determination of an amount of thermal energy supplied by the at least one collective heat management device (30) to at least one individual premises (20) of the collective building (2) over a given period, said allocator (10) comprising one or more processors configured to determine the amount of thermal energy supplied by using,

  - a simulation model,
  - a plurality of ambient temperature values of the collective building (2), the plurality of ambient temperature values of the collective building (2) including a plurality of temperatures of the individual premises (20),
  - one or more values of temperatures outside the collective building (2),
  - a volume of the individual premises (20), and
  - at least one heat loss coefficient of the individual premises (20), said allocator (10) being **characterised in that** said allocator (10) is configured to calculate (130) the at least one heat loss coefficient of the individual premises (20) on the basis of the simulation model,

  **in that**

the simulation model is a thermal simulation model (41) of the collective building (2) which virtually represents the collective building (2) and which takes into account, for each individual premises (20), a geometry of the individual premises (20) and a composition of the walls of the individual premises (20), as well as the heat exchange between various premises of the collective building (2);
and **in that** said allocator (10) comprising one or more processors configured to determine the amount of thermal energy supplied by further using a plurality of temperatures of premises or common spaces of the collective building (2) which are adjacent to the individual premises (20).

17. The allocator (10) according to claim 16, wherein when said individual premises (20) is additionally defined by a joinery composition, the system being **characterised in that** the thermal simulation model (41) of the collective building (2) additionally takes into account the joinery composition.

18. The system (1) for allocating heating costs including an allocator (10) according to any one of claims 16 to 17.

[Fig. 1]

100

110 — Génération d'un modèle de simulation thermique du bâtiment

120 — Calibrage du modèle de simulation thermique du bâtiment

130 — Calcul d'un coefficient de déperdition thermique du local à partir d'un modèle de simulation thermique du bâtiment

140 — Ajustement de la quantité d'énergie thermique fournie

150 — Analyse des consommations électriques

160 — Quantification de l'utilisation de dispositif de chauffage complémentaire

170 — Calcul de frais de chauffage individualisé en fonction d'une quantité déterminée d'énergie thermique fournie

180 — Transmission de données à un dispositif électronique de visualisation

FIG. 1

[Fig. 2]

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2672991 A1

- FR 3062723 A1

**Littérature non-brevet citée dans la description**

- **HUGO VIOT.** Modélisation et instrumentation d'un bâtiment et de ses systèmes pour optimiser sa gestion énergétique. Université de Bordeaux, 2016